# EUROPEAN PATENT APPLICATION

(11) **EP 4 583 371 A1**
(43) Date of publication of application: **09.07.2025**
(21) Application number: 23860132.2
(22) Date of filing: 22.08.2023
(51) Int. Cl.: H02K 5/00, C08G 8/00, C08G 59/40, H02K 3/30, H02K 3/44

(54) **RESIN COMPOSITION FOR SEALING STATOR, AND METHOD FOR DISASSEMBLING STATOR**

(30) Priority: 31.08.2022 JP 2022138064
(71) Applicant: Sumitomo Bakelite Co.Ltd., Shinagawa-ku Tokyo 140-0002 (JP)
(72) Inventor: KUMAMOTO Tsuneaki, Tokyo 140-0002 (JP); MAKIHARA Koji, Tokyo 140-0002 (JP)
(74) Representative: Müller-Boré & Partner Patentanwälte PartG mbB
(86) International application number: PCT/JP2023/030162
(87) International publication number: WO 2024/048369

(57) **Abstract**

A resin composition for a stator, which is used for forming a sealing member in a stator including a stator core having a plurality of teeth parts and a plurality of slots that are alternately formed in a circumferential direction, a coil wound around the slot, accommodated in the slot, and having a pair of coil ends that each protrude over both sides from the stator core in an axial direction, and a sealing member provided by covering the coil in the slot, the resin composition for a stator including a thermosetting component, in which a cured product obtained by thermally curing the resin composition for a stator has a structure represented by Formula (1) and has an easily disassembling property. (In Formula (1), R1 and R2 each independently represent any of a hydrogen atom, a hydrocarbon group or aromatic group having 1 to 30 carbon atoms, a hydroxyl group, and an alkoxyl group having 1 to 30 carbon atoms.)

## Description

### TECHNICAL FIELD

The present invention relates to a resin composition for sealing a stator and a method for disassembling a stator. More specifically, the present invention relates to a resin composition for sealing a stator, a stator including a cured product of a resin composition for sealing a stator, a method for disassembling a cured product of a resin composition for sealing a stator, and a recycling method for a material constituting a stator.

### BACKGROUND ART

An electric machine such as a motor includes a rotor provided on a shaft serving as a shaft and a stator (also referred to as a motor core) disposed on an outer peripheral side of the rotor. The stator has a coil wound around a teeth part and is resin-sealed together with the coil.

As a technique of using a resin material for the stator, for example, a technique described in Patent Document 1 (Japanese Unexamined Patent Publication No. 2003-284277) is known. This document describes a rotating electric machine including a stator in which a plurality of coils are wound around a stator core formed by laminating a plurality of electromagnetic steel sheets at a predetermined interval, a rotor held rotatably with respect to this stator, and a cooling frame fixing the stator, in which a highly heat-conductive composite material with slots that are winding portions of a stator and are formed of a thermosetting resin having an anisotropic structure in the resin component, is disposed, and it is assumed that due to such a configuration, a rotating electric machine that easily transfers heat generated in the coils and has satisfactory heat dissipation properties is provided.

### RELATED DOCUMENT

### PATENT DOCUMENT

[Patent Document 1] Japanese Unexamined Patent Publication No. 2003-284277

### SUMMARY OF THE INVENTION

### TECHNICAL PROBLEM

In recent years, there has been an increasing interest in effective use of resources, and a technique for reusing a conductive wire made of copper or the like used in a coil has been attracting attention.

However, in the related art as disclosed in Patent Document 1, in a case where the coil is intended to be reused from the stator, methods such as destruction of a sealing resin or heating a sealing resin at a high temperature to ash the sealing resin may be used, but there is room for improvement in terms of simplification of the process and reduction of recycling cost. In addition, unless the thermal energy for ashing the sealing resin is clean, new problems such as generation of carbon dioxide occur.

As a result of intensive examination on a resin material used for a stator in order to solve such a problem, the present inventors have found that a cured product of a resin composition for a stator is effective to have a predetermined structure. That is, it is considered that the network in the cured product of the resin composition for a stator is divided because the predetermined structural portion is easily separated in a case where the stator formed of the predetermined resin composition for a stator is subjected to a solution treatment, and thus the cured product can be disassembled. As a result, the coil of the stator or the like can be easily taken out.

### SOLUTION TO PROBLEM

The present invention relates to a resin composition for sealing a stator, and a technique related thereto.
[1] A resin composition for sealing a stator, which is used for forming a sealing member in a stator including a stator core having a plurality of teeth parts and a plurality of slots that are alternately formed in a circumferential direction, a coil wound around the slot, accommodated in the slot, and having a pair of coil ends that each protrude over both sides from the stator core in an axial direction, and a sealing member provided by covering the coil in the slot, the resin composition for a stator including: a thermosetting component, in which a cured product obtained by thermally curing the resin composition for a stator has a structure represented by Formula (1) and has an easily disassembling property. 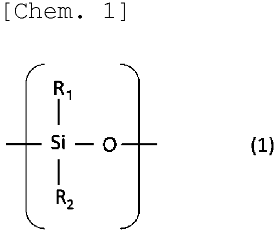 (In Formula (1), R₁ and R₂ each independently represent any of a hydrogen atom, a hydrocarbon group or aromatic group having 1 to 30 carbon atoms, a hydroxyl group, or an alkoxyl group having 1 to 30 carbon atoms.)
[2] The resin composition for sealing a stator according to [1], in which the thermosetting component has a -Si-O-structure.
[3] The resin composition for sealing a stator according to [1] or [2], in which the thermosetting component contains a thermosetting resin and a curing agent, and both the thermosetting component and the curing agent have a -Si-O-structure.
[4] The resin composition for sealing a stator according to [1] or [2], in which the thermosetting component contains a thermosetting resin and a curing agent, and the curing agent has a -Si-O- structure.
[5] The resin composition for sealing a stator according to [3] or [4], in which the curing agent includes a phenol-based curing agent.
[6] The resin composition for sealing a stator according to any one of [1] to [5], in which the thermosetting component contains a thermosetting resin and a curing agent, and the thermosetting resin has a -Si-O- structure.
[7] The resin composition for sealing a stator according to any one of [3] to [6], in which the thermosetting resin includes one or two or more selected from an epoxy resin, a phenoxy resin, a polyimide resin, a benzoxazine resin, an unsaturated polyester resin, a phenol resin, a melamine resin, a silicone resin, a cyanate resin, a bismaleimide resin, and an acrylic resin.
[8] The resin composition for sealing a stator according to [7], in which the thermosetting resin includes an epoxy resin.
[9] The resin composition for sealing a stator according to any one of [1] to [8], further including: an inorganic filler, in which a content of the inorganic filler is 10% to 98% by mass with respect to a total amount of the resin composition for sealing a stator.
[10] The resin composition for sealing a stator according to any one of [1] to [9], further including: a silyl ether-modified novolac resin.
[11] The resin composition for sealing a stator according to any one of [1] to [10], further including: a phenol resin having a weight-average molecular weight (Mw) of 500 to 10000.
[12] The resin composition for sealing a stator according to any one of [1] to [11], in which the resin composition for sealing a stator is in a form of a powdery, granular, tablet, or sheet shape.
[13] A stator including: a stator core having a plurality of teeth parts and a plurality of slots that are alternately formed in a circumferential direction; a coil wound around the slot, accommodated in the slot, and having a pair of coil ends that each protrude over both sides from the stator core in an axial direction; and a sealing member provided by covering the coil in the slot, in which the sealing member is formed of a cured product of the resin composition for sealing a stator according to any one of [1] to [12].
[14] A method for disassembling the stator according to [13], the method including: a step of immersing the stator in a solvent to disassemble the cured product of the resin composition for sealing a stator.
[15] The method for disassembling the stator according to [14], in which the solvent is a solvent containing a fluorine ion.
[16] The method for disassembling the stator according to [14] or [15], in which the immersion is performed at -20°C to 200°C.
[17] The method for disassembling the stator according to any one of [14] to [16], in which the immersion is performed at 5°C to 30°C.
[18] A recycling method for a material constituting the stator according to [13], the recycling method including: a step of immersing the stator in a solvent to disassemble the cured product; and a step of recovering the material from the stator.

### ADVANTAGEOUS EFFECTS OF INVENTION

According to the present invention, resource recyclability can be improved by the easily disassembling property of the cured product of the resin composition for a stator.

### BRIEF DESCRIPTION OF THE DRAWINGS

Fig. 1 is a cross-sectional view in a direction perpendicular to a rotating shaft direction of a motor.
Fig. 2 is a vertical cross-sectional view in the rotating shaft direction of the motor.
Fig. 3 is an enlarged view of the periphery of a slot.

### DESCRIPTION OF EMBODIMENTS

In the present specification, a denotation "a to b" in the description of a numerical value range represents a or more and b or less unless specified otherwise. For example, "1% to 5% by mass" means "1% by mass or more and 5% by mass or less". In addition, the lower limit value and the upper limit value of the numerical value range can be respectively combined with the lower limit value and the upper limit value of other numerical value ranges.

Each component and material exemplified in the present specification may be used alone or may be used in a combination of two or more kinds thereof, unless otherwise specified.

In a denotation of a group (atomic group) in the present specification, a denotation that does not indicate whether a group is substituted or unsubstituted includes both a group having no substituent and a group having a substituent. For example, an "alkyl group" includes not only an alkyl group having no substituent (unsubstituted alkyl group) but also an alkyl group having a substituent (substituted alkyl group).

In addition, in a denotation of a group (atomic group) in the present specification, a denotation that does not indicate where a group is linear, branched, or cyclic, may indicate any of linear, branched, or cyclic.

Unless otherwise specified, the term "organic group" in the present specification means an atomic group obtained by removing one or more hydrogen atoms from an organic compound. For example, the "monovalent organic group" indicates an atomic group obtained by removing one hydrogen atom from any organic compound.

Hereinafter, embodiments of the present invention will be described in detail.

### 1. Resin composition for stator

A resin composition for a stator according to the present embodiment (hereinafter, also simply referred to as "resin composition") contains a thermosetting component, and a cured product obtained by thermally curing the resin composition has a structure represented by Formula (1). In addition, the conditions for the above-described thermal curing may be set to 175°C for 2 minutes. 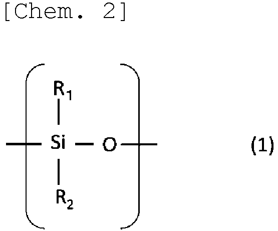 (In Formula (1), R₁ and R₂ each independently represent any of a hydrogen atom, a hydrocarbon group or aromatic group having 1 to 30 carbon atoms, a hydroxyl group, or an alkoxyl group having 1 to 30 carbon atoms.)

In this manner, in a case where the cured product of the resin composition according to the present embodiment is subjected to a solution treatment, a structure represented by Formula (1) is separated, a crosslinking structure in the cured product is broken, and thus the easily disassembling property is obtained. The structure represented by Formula (1) may be a structure that is formed by a thermosetting reaction of the thermosetting component.

In the present embodiment, the term "easily disassembling property" denotes that a cured product is subjected to gel decomposition and dissolved in a case where the cured product is subjected to a solution treatment.

In addition, the presence or absence of the structure represented by Formula (1) in the cured product can be confirmed, for example, by a typical analysis method such as gas chromatography, high-performance liquid chromatography, thin-layer chromatography, NMR, or IR. The analysis target in a case of being confirmed may be in a state of a cured product or may be a decomposition liquid that is obtained by decomposing a cured product. From the viewpoint of the confirmation based on the state of the cured product, a gas chromatography-mass spectrometry (GC-MS) method is preferable. In addition, the analysis target may be a decomposition treatment liquid of a cured product from the viewpoint that the structure thereof is easily distinguished from a structure due to a coupling agent or the like described below.

In addition, it is preferable that the cured product according to the present embodiment has a structure represented by Formula (1) as a repeating unit. The number of repetitions is not particularly limited, but the average number of repetitions may be 5 to 1500.

In Formula (1), R₁ and R₂ each independently represent any of a hydrogen atom, a hydrocarbon group or aromatic group having 1 to 30 carbon atoms, a hydroxyl group, and an alkoxyl group having 1 to 30 carbon atoms.

The hydrocarbon group having 1 to 30 carbon atoms may be any of linear, branched, or cyclic, and may or may not have a substituent.

The hydrocarbon group having 1 to 30 carbon atoms is preferably a linear alkyl, alkenyl, or alkynyl group having 1 to 20 carbon atoms and more preferably a linear alkyl, alkenyl, or alkynyl group having 1 to 10 carbon atoms.

The branched hydrocarbon group having 3 to 20 carbon atoms is preferably a branched alkyl, alkenyl, or alkynyl group having 3 to 20 carbon atoms, more preferably a branched alkyl, alkenyl, or alkynyl group having 3 to 10 carbon atoms, and still more preferably a branched alkyl, alkenyl, or alkynyl group having 3 to 6 carbon atoms.

The cyclic hydrocarbon group having 3 to 20 carbon atoms is preferably a cycloalkyl, cycloalkenyl, or cycloalkynyl group having 3 to 20 carbon atoms and more preferably a cycloalkenyl or cycloalkynyl group having 5 to 10 carbon atoms. Specific examples thereof include a cyclopropyl group, a cyclobutyl group, a cyclopentyl group, and a cyclohexyl group.

The aromatic group may have a substituent, and examples of the substituent include a hydrocarbon group, a hydroxyl group, a halogen atom, and an amino group.

The alkoxyl group having 1 to 30 carbon atoms is preferably an alkoxyl group having 1 to 10 carbon atoms and more preferably an alkoxyl group having 1 to 6 carbon atoms. Specific examples thereof include a methoxy group, an ethoxy group, and an isopropoxy group.

The resin composition according to the present embodiment contains a thermosetting component. The thermosetting component may contain a group which is polymerized or crosslinked typically by an action of an active chemical species such as a radical, and specifically, the thermosetting component may be any of a thermosetting resin or a curing agent. The resin composition according to the present embodiment may contain only one kind or two or more kinds of thermosetting components.

It is preferable that the resin composition according to the present embodiment contains a thermosetting resin and a curing agent. In this case, it is preferable that at least one of the thermosetting resin or the curing agent has a -Si-O-structure. In this manner, the cured product of the resin composition according to the present embodiment can have a structure represented by Formula (1), and the cured product can be dissolved in a solvent, whereby the easily disassembling property is obtained.

In the resin composition according to the present embodiment, various components can be combined so that the cured product has a structure represented by Formula (1), and specific examples thereof include resin compositions having the following forms.
<1> A resin composition containing a phenol resin (P) having a -Si-O- structure
<2> A resin composition containing a thermosetting resin and, as a curing agent, a phenol resin (P) having a -Si-O-structure
<3> A resin composition containing an epoxy resin (A) having a -Si-O- structure
<4> A resin composition containing, as a thermosetting resin, a silicone resin (organopolysiloxane) (C1) having two or more alkenyl groups bonded to a silicon atom in one molecule, and as a curing agent, an organohydrogen polysiloxane (C2) having two or more hydrogen atoms bonded to a silicon atom in one molecule
<5> A resin composition containing an acrylic/vinyl resin obtained by reacting an unsaturated bond having a -Si-O-structure in a main chain

Hereinafter, each embodiment will be described in detail.

### <First embodiment>

In a first embodiment, the resin composition containing a phenol resin (P) having a -Si-O- structure will be described. In this case, the curing agent may be a curing agent which does not have a -Si-O- structure, or a known curing agent may be used. The known curing agent will be described below.

As the phenol resin (P) having a -Si-O- structure, a phenol resin modified with silyl ether having a phenolic hydroxyl group can be used. Specific examples thereof include silyl ether-modified novolac represented by Formula (P1).

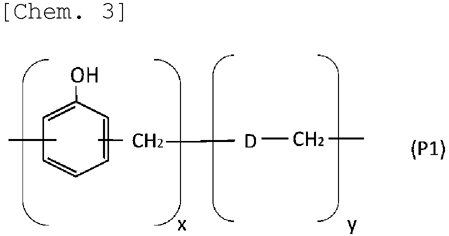

In Formula (P1), both x and y represent an integer, and x + y is 2 to 200.

In addition, from the viewpoint of obtaining a satisfactory disassembling property and satisfactory moldability, in Formula (P1), it is preferable to satisfy x:y = 1:99 to 99:1, more preferable to satisfy x:y = 2:98 to 75:25, and still more preferable to satisfy x:y = 5:95 to 50:50.

In addition, in Formula (P1), D has a structure represented by Formula (P1-1) below.

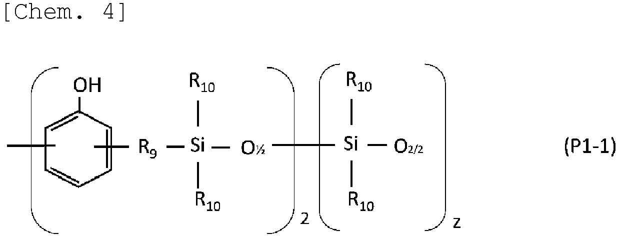

In Formula (P1-1), R₉ represents a divalent hydrocarbon group having 2 to 10 carbon atoms. R₁₀'s each independently represent any of a hydrogen atom, a monovalent hydrocarbon group or aromatic group having 1 to 30 carbon atoms, a hydroxyl group, and an alkoxyl group having 1 to 30 carbon atoms. z represents an integer of 0 to 10.

Among these, R₉ represents preferably a divalent hydrocarbon group having 2 to 5 carbon atoms, more preferably a divalent hydrocarbon group having 2 to 4 carbon atoms, and still more preferably a propenyl group. R₁₀'s each independently represent preferably a monovalent hydrocarbon group having 1 to 20 carbon atoms, more preferably a monovalent hydrocarbon group having 1 to 10 carbon atoms, and an alkyl group, more preferably an alkyl group having 1 to 5 carbon atoms, and still more preferably a methyl group.

The weight-average molecular weight (Mw) of the phenol resin (P1) is not particularly limited, but is preferably 500 to 10,000, more preferably 1,000 to 8,000, and still more preferably 1,500 to 5,000. In addition, the number average molecular weight of the phenol resin (P1) is not particularly limited, but is preferably 100 to 5,000, more preferably 300 to 3,000, and still more preferably 600 to 1,000.

In the present embodiment, Mw and Mn can be calculated by gel permeation chromatography (GPC).

Regarding a synthesis method for the phenol resin (P), the phenol resin (P) can be synthesized by reacting silyl ethers, phenols, and aldehydes in the presence of an acid catalyst.

The silyl ethers preferably have a phenolic hydroxyl group, and examples thereof include a compound represented by Formula (P1-2) below.

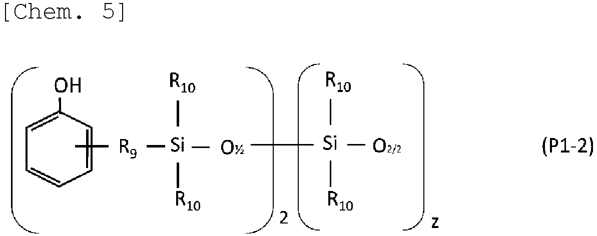

In Formula (P1-2), R₉ represents a divalent hydrocarbon group having 2 to 10 carbon atoms. R₁₀'s each independently represent any of a hydrogen atom, a monovalent hydrocarbon group or aromatic group having 1 to 30 carbon atoms, a hydroxyl group, and an alkoxyl group having 1 to 30 carbon atoms. z represents an integer of 0 to 10.

Among these, R₉ represents preferably a divalent hydrocarbon group having 2 to 5 carbon atoms, more preferably a divalent hydrocarbon group having 2 to 4 carbon atoms, and still more preferably a propenyl group. R₁₀'s are each independently preferably a monovalent hydrocarbon group having 1 to 20 carbon atoms and is more preferably a monovalent hydrocarbon group having 1 to 10 carbon atoms. In addition, it is preferably an alkyl group, more preferably an alkyl group having 1 to 5 carbon atoms, and still more preferably a methyl group.

Examples of the above-described phenols include, which is not limited to these, phenol; cresols such as ortho-cresol, meta-cresol, and para-cresol; xylenols such as 2,3-xylenol, 2,4-xylenol, 2,5-xylenol, 2,6-xylenol, and 3,5-xylenol; alkyl phenols such as 2,3,5-trimethylphenol, 2-ethylphenol, 4-ethylphenol, 2-isopropylphenol, 4-isopropylphenol, n-butylphenol, isobutylphenol, tert-butylphenol, hexylphenol, octylphenol, nonylphenol, phenylphenol, benzylphenol, cumylphenol, allylphenol, cardanol, urushiol, thitsiol, and laccol; naphthols such as 1-naphthol and 2-naphthol; halogenated phenols such as fluorophenol, chlorophenol, bromophenol, and iodophenol; monohydric phenol substitutes such as p-phenylphenol, aminophenol, nitrophenol, dinitrophenol, and trinitrophenol; and polyhydric phenols such as resorcinol, an alkyl resorcinol, pyrogallol, catechol, an alkyl catechol, hydroquinone, an alkyl hydroquinone, phloroglucin, bisphenol A, bisphenol F, bisphenol S, dihydroxynaphthalene, and naphthalene. These may be used alone or in combination of two or more kinds thereof. Among these, the phenols may include one or more selected from the group consisting of phenol, cresol, xylenol, and alkylphenol, and from the viewpoint of low cost, phenol can be used.

The aldehydes are not particularly limited, and examples thereof include formaldehydes such as formalin and para-formaldehyde; trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenylacetaldehyde, o-tolualdehyde, and salicylaldehyde. These aldehydes may be used alone or in combination of two or more kinds thereof. Among these, the aldehydes may include formaldehyde or acetaldehyde, and from the viewpoint of productivity and low cost, formalin or para-formaldehyde can be used.

Regarding a catalyst to be used in the synthesis of the phenol resin (P), a catalyst may not be used, or an acidic catalyst can be used from the viewpoint of producing a novolac-type phenol resin. The acidic catalyst is not particularly limited, and examples thereof include acids such as oxalic acid, hydrochloric acid, sulfuric acid, diethyl sulfate, and paratoluenesulfonic acid, and metal salts such as zinc acetate, and these can be used alone or in combination of two or more kinds thereof.

As the reaction solvent to be used in the synthesis of the phenol resin (P), water or an organic solvent may be used. As the organic solvent, a non-aqueous system can be used by using a non-polar solvent. Examples of the organic solvent include alcohols, ketones, and aromatics, examples of the alcohols include methanol, ethanol, propyl alcohol, ethylene glycol, diethylene glycol, triethylene glycol, and glycerin, examples of the ketones include acetone and methyl ethyl ketone, and examples of the aromatics include toluene and xylene. These may be used alone or in combination of two or more kinds thereof.

In addition, regarding the molar ratio (F/P molar ratio) of the phenols (P) to the aldehydes (F), the amount of the aldehydes may be set to, for example, 0.2 to 1.0 moles with respect to 1 mole of the phenols and can be preferably set to 0.3 to 0.9 mol. By setting the amount of the aldehydes to be in the above-described ranges, the amount of unreacted phenol can be reduced, and the yield can be increased.

In addition, the reaction temperature may be set to, for example, 40°C to 120°C and preferably 60°C to 110°C. Further, the reaction time is not particularly limited, and may be appropriately determined according to the kind of the starting material, the molar ratio in the blending, the amount and kind of the catalyst to be used, and the reaction conditions.

As described above, the phenol resin (P) can be obtained.

### <Second embodiment>

In a second embodiment, a case where the phenol resin (P) having a -Si-O- structure is used as a curing agent will be described. In this case, the thermosetting resin may or may not have a -Si-O- structure, but in the second embodiment, a case where the thermosetting resin does not have a -Si-O- structure will be described. The thermosetting resin is not particularly limited, and a known epoxy resin can be used. The known epoxy resin will be described below.

In addition, the phenol resin (P) as a curing agent and the epoxy resin are adjusted so that an equivalent ratio (EP)/(OH) of the number of epoxy groups (EP) in the total thermosetting resin to the number of phenolic hydroxyl groups (OH) in the total phenol resin is preferably equal to or greater than 0.8 and equal to or less than 1.6, more preferably equal to or greater than 0.9 and equal to or less than 1.3, and still more preferably equal to or greater than 1.0 and equal to or less than 1.2. In a case where the equivalent ratio thereof is in the above-described ranges, the curing characteristics of the obtainable resin composition according to the present embodiment can be enhanced.

Other components contained in the resin composition according to the second embodiment will be described below.

### <Third embodiment>

In a third embodiment, a resin composition containing an epoxy resin (A) having a -Si-O- structure will be described. In this case, the curing agent may or may not have a -Si-O-structure, but in the third embodiment, a case where the thermosetting resin does not have a -Si-O- structure will be described. The curing agent is not particularly limited, and a known curing agent may be used. The known curing agent will be described below.

Specific examples of the epoxy resin (A) having a -Si-O-structure include an epoxy resin (A1) having a -Si-O- structure, which is obtained by epoxidizing the phenol resin (P1) having a -Si-O- structure, which is described in the first embodiment; a di- or higher functional epoxy compound (A2) having a structure represented by Formula (A2); and an organosiloxane-type epoxy compound (A3) having a structure represented by Formula (A3).

### [Epoxy resin (A1)]

Examples of the epoxy resin (A1) having a Si-O- structure, which is obtained by epoxidizing the phenol resin (P1) having a -Si-O- structure include those represented by Formula (A1).

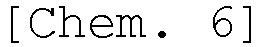

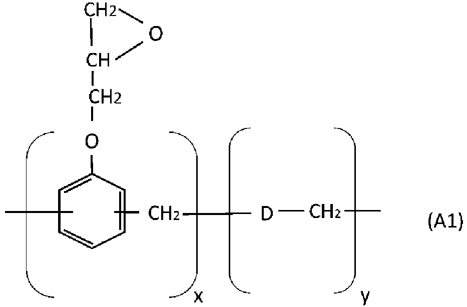

In Formula (A1), both x and y represent an integer, and x + y is 2 to 200.

In addition, from the viewpoint of obtaining a satisfactory disassembling property and satisfactory moldability, in Formula (A1), it is preferable to satisfy x:y = 1:99 to 99:1, more preferable to satisfy x:y = 2:98 to 75:25, and still more preferable to satisfy x:y = 5:95 to 50:50.

In addition, in Formula (A1), D has a structure represented by Formula (A1-1).

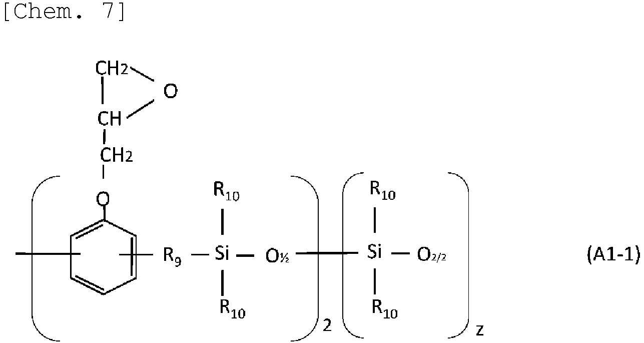

In Formula (A1-1), R₉ represents a divalent hydrocarbon group having 2 to 10 carbon atoms. R₁₀'s each independently represent any of a hydrogen atom, a monovalent hydrocarbon group or aromatic group having 1 to 30 carbon atoms, a hydroxyl group, and an alkoxyl group having 1 to 30 carbon atoms. z represents an integer of 0 to 10.

Among these, R₉ represents preferably a divalent hydrocarbon group having 2 to 5 carbon atoms, more preferably a divalent hydrocarbon group having 2 to 4 carbon atoms, and still more preferably a propenyl group. R₁₀'s are each independently preferably a monovalent hydrocarbon group having 1 to 20 carbon atoms and is more preferably a monovalent hydrocarbon group having 1 to 10 carbon atoms. In addition, it is preferably an alkyl group, more preferably an alkyl group having 1 to 5 carbon atoms, and still more preferably a methyl group.

The epoxy resin (A1) can be produced by epoxidizing the above-described phenol resin (P1) by a known method.

### [Epoxy compound (A2)]

The epoxy compound (A2) is a di- or higher functional epoxy compound (A2) having a structure represented by Formula (A2).

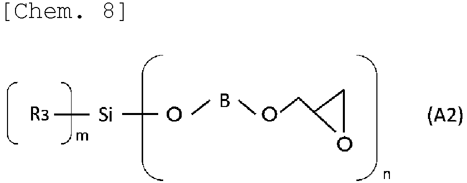

In Formula (A2), m and n represent an integer, and m + n is 4.

R₃'s independently represent hydrogen, alkyl, alkenyl, alkynyl, cycloalkyl, cycloalkenyl, cycloalkynyl, aryl, heterocyclic, heterocycloalkyl, cycloalkenyl, heteroaryl, alkoxyaryl, or alkoxyalkyl.

B's independently represent an arylene, an arylene ether, an alkylene-arylene, an alkylene-arylene alkylene, an alkenylene-arylene, an alkenylene-arylene alkenylene, an alkylene-arylene-alkenylene, an alkynylene-arylene, an alkynylene-arylene-alkynylene, a heteroarylene, an alkylene-heteroarylene, an alkylene-heteroarylene-alkylene, an alkenylene-heteroarylene, an alkenylene-heteroarylene-alkenylene, an alkylene-heteroarylene-alkenylene, an alkynylene heteroarylene, an alkynylene-heteroarylene-alkynylene, an alkylene, an alkylene-hetero-alkylene, an alkenylene, an alkenylene-hetero-alkenylene, an alkylene-hetero-alkenylene, an alkynylene, a cycloalkylene, an alkylene-cycloalkylene, an alkylene-cycloalkylene alkylene, an alkenylene-cycloalkylene, an alkenylene cycloalkylene-alkenylene, an alkylene-cycloalkylene alkenylene, an alkynylene-cycloalkylene, an alkynylene cycloalkylene-alkynylene, a heterocycloalkylene, an alkylene heterocycloalkylene, an alkylene-heterocycloalkylene-alkylene, an alkenylene-heterocycloalkylene, an alkenylene heterocycloalkylene-alkenylene, an alkylene heterocycloalkylene-alkenylene, an alkynylene heterocycloalkylene, an alkynylene-heterocycloalkylene-alkynylene, a cycloalkenylene, an alkylene-cycloalkenylene, an alkylene-cycloalkenylene-alkylene, an alkenylene-cycloalkenylene, an alkenylene-cycloalkenylene-alkenylene, an alkylene-cycloalkenylene-alkenylene, an alkynylene-cycloalkenylene, an alkynylene-cycloalkenylene-alkynylene, a heterocycloalkenylene, an alkylene-heterocycloalkenylene, an alkylene-heterocycloalkenylene-alkylene, an alkenylene-heterocycloalkenylene, an alkenylene-heterocycloalkenylene-alkenylene, an alkylene-heterocycloalkenylene-alkenylene, an alkynylene heterocycloalkenylene, an alkynylene-heterocycloalkenylene, or an alkynylene.

Specific examples of the above-described di- or higher functional epoxy compound (A2) include compounds each represented by Formulae (A2-1) to (A2-19).

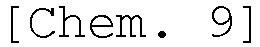

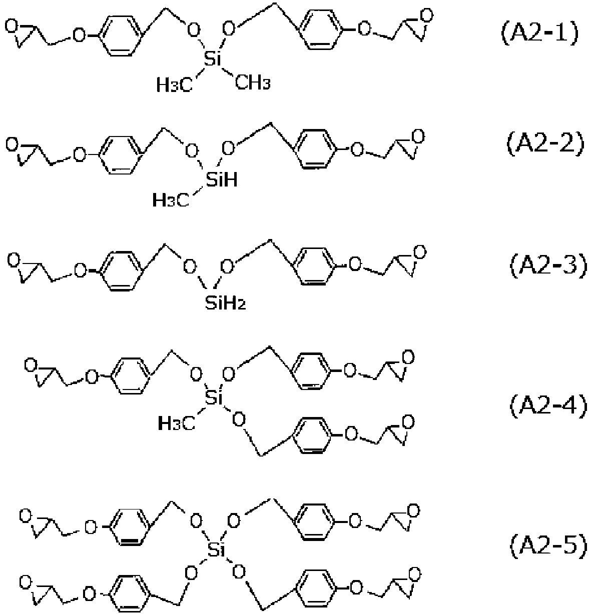

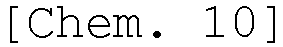

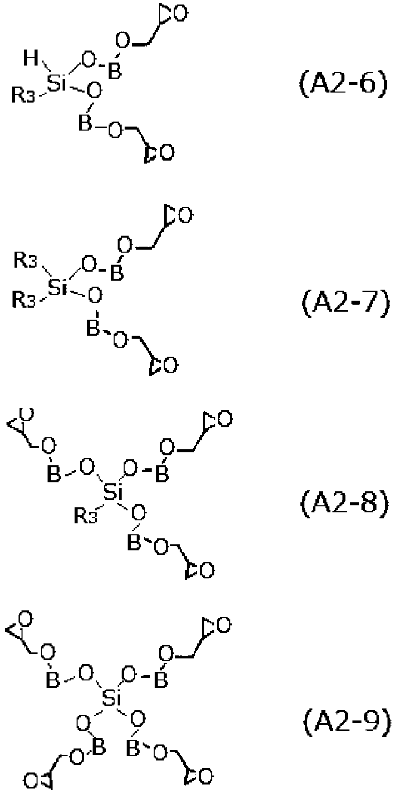

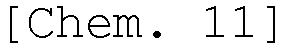

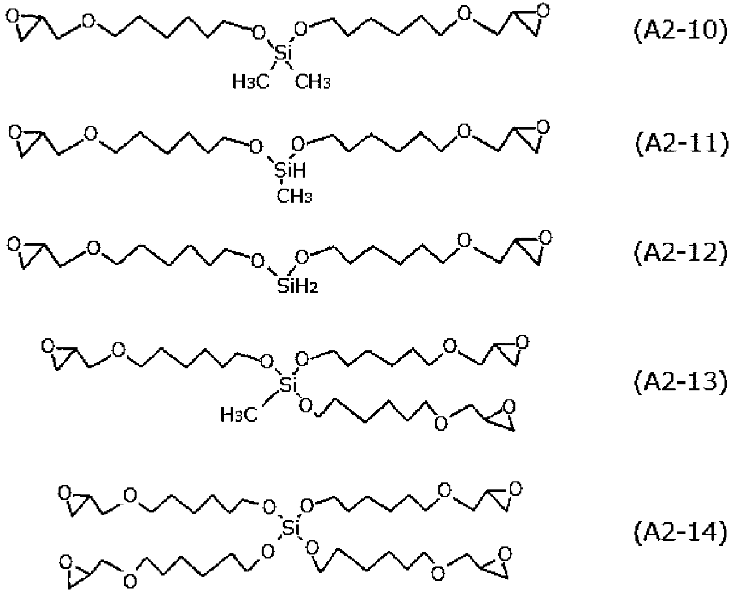

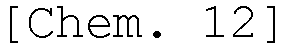

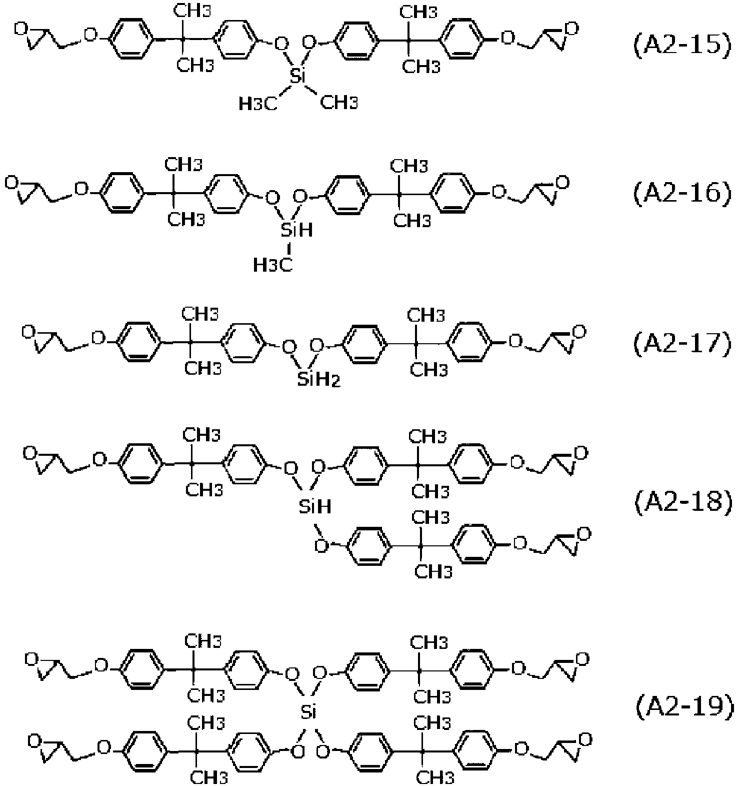

The epoxy compound (A2) can be obtained, for example, as follows.

First, the epoxy compound (A2) can be obtained by performing a step of partially epoxidizing polyhydric alcohol having one or a plurality of hydroxy groups with epihalohydrin in the presence of a base to obtain a partially epoxidized alcohol, and a step of reacting the partially epoxidized alcohol with a compound having a structure each represented by Formulae (4-1) to (4-3) in the presence of an acidic catalyst. In this manner, a mixture containing the epoxy compound (A2) having a - Si-O- structure can be obtained. 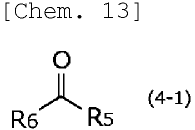 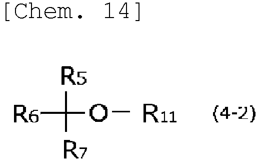 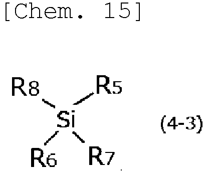 (In the formulae, R₅ to R₈ each independently represent hydrogen, alkyl, alkenyl, alkynyl, methylene, cycloalkyl, cycloalkenyl, cycloalkynyl, aryl, heterocyclic, heterocycloalkyl, cycloalkenyl, heteroaryl, alkoxy, alkoxyaryl, alkoxyalkyl, or aryloxy, and R₁₁ represents hydrogen, alkyl, aryl, aralkyl, alkenyl, or alkynyl.)

### [Epoxy compound (A3)]

The epoxy compound (A3) has a structure represented by Formula (A3).

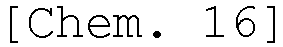

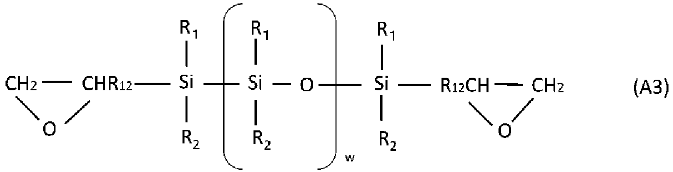

In Formula (A3), R₁ and R₂ each independently represent any of a hydrogen atom, a hydrocarbon group or aromatic group having 1 to 30 carbon atoms, a hydroxyl group, or an alkoxyl group having 1 to 30 carbon atoms.

R₁₂'s each independently represent any of a hydrogen atom or a hydrocarbon group having 1 to 30 carbon atoms.

w represents an integer of 1 to 50.

As the epoxy compound (A3), a commercially available product can be used, and examples thereof include Dual-end Epoxy-modified Silicones "X-22-163", "X-22-163A", "X-22-163B", "X-22-163C", and "KF-105" (all manufactured by Shin-Etsu Chemical Co., Ltd.).

In addition, specific examples of the above-described epoxy compound (A3) include a compound represented by Formula (A3-1).

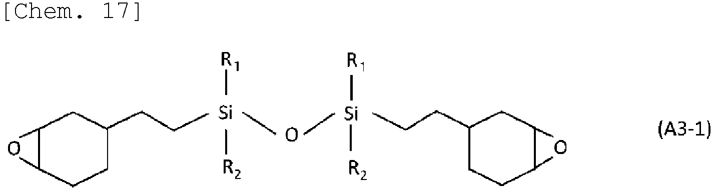

In Formula (A3-1), R₁ and R₂ each independently represent any of a hydrogen atom, a hydrocarbon group or aromatic group having 1 to 30 carbon atoms, a hydroxyl group, or an alkoxyl group having 1 to 30 carbon atoms.

Among these, R₁ and R₂ represent preferably an alkyl group having 1 to 30 carbon atoms, more preferably an alkyl group having 1 to 3 carbon atoms, and still more preferably a methyl group.

As the epoxy compound represented by Formula (A3-1), a commercially available product can be used, and examples thereof include an alicyclic epoxy group-containing linear siloxane difunctional oligomer "X-40-2669" (manufactured by Shin-Etsu Chemical Co., Ltd.).

Hereinafter, the physical properties of the epoxy resin (A) having a -Si-O- structure according to the present embodiment will be described.

The weight-average molecular weight (Mw) of the epoxy resin (A) having a -Si-O- structure according to the present embodiment is not particularly limited, but is preferably 500 to 10,000, more preferably 1,000 to 7,000, and still more preferably 2,000 to 6,000.

The number average molecular weight (Mn) of the epoxy resin (A) having a -Si-O- structure according to the present embodiment is not particularly limited, but is preferably 100 to 5,000, more preferably 300 to 3,000, and still more preferably 600 to 1,000.

In addition, the viscosity of the epoxy resin (A) having a -Si-O- structure according to the present embodiment is preferably in a range of 1 to 40,000 mPa·s.

In addition, it is preferable that the epoxy resin (A) having a -Si-O- structure according to the present embodiment has an epoxy equivalent weight (EEW) in a range of 100 to 600 g/milliequivalents. Further, the epoxy equivalent weight denotes the mass (gram) of the resin containing 1 equivalent of epoxy.

In the third embodiment, it is suitable to use a known phenol-based curing agent as the resin composition.

In addition, the phenol-based curing agent as a curing agent and the epoxy resin (A) having a -Si-O- structure are adjusted such that an equivalent ratio (EP)/(OH) of the number of epoxy groups (EP) in the total thermosetting resin to the number of phenolic hydroxyl groups (OH) in the total phenol resin is preferably equal to or greater than 0.8 and equal to or less than 1.6, more preferably equal to or greater than 0.9 and equal to or less than 1.3, and still more preferably equal to or greater than 1.0 and equal to or less than 1.2. In a case where the equivalent ratio thereof is in the above-described ranges, the curing characteristics of the obtainable resin composition according to the present embodiment can be enhanced.

Other components contained in the resin composition according to the third embodiment will be described below.

### <Fourth embodiment>

In a fourth embodiment, a resin composition that contains, as a thermosetting resin, an organopolysiloxane (silicone resin) (C1) having two or more alkenyl groups bonded to a silicon atom in one molecule and that contains, as a curing agent (crosslinking agent), an organohydrogen polysiloxane (C2) having two or more hydrogen atoms bonded to a silicon atom in one molecule will be described.

### (Organopolysiloxane (C1))

The organopolysiloxane (C1) having two or more alkenyl groups bonded to a silicon atom in one molecule is preferably a linear organopolysiloxane and is a linear organopolysiloxane having preferably 2 to 8 alkenyl groups bonded to a silicon atom in one molecule. Specific examples thereof include a compound having a structure represented by Formula (C1-1).

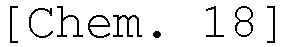

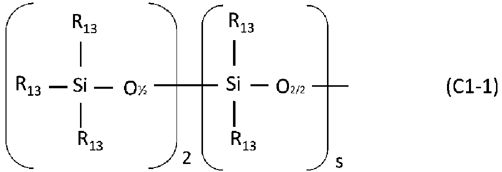

In Formula (C1-1), R₁₃'s represent alkyl groups having 1 to 10 carbon atoms, aryl groups having 6 to 12 carbon atoms, or alkenyl groups having 2 to 10 carbon atoms, which are substituted or unsubstituted and which are the same as or different from each other.

Specific examples of R₁₃ include a fluorine-substituted alkyl group such as a trifluoromethyl group or a 3,3,3-trifluoropropyl group, an alkenyl group such as a vinyl, allyl, butenyl, pentenyl, hexenyl, or cyclohexenyl group, and aryl groups such as a phenyl group, in which an alkyl group such as a methyl, ethyl, propyl, butyl, pentyl, hexyl, or cyclohexyl group, or some or all hydrogen atoms bonded to carbon atoms of these alkyl groups are substituted with halogen atoms such as a chlorine atom, a fluorine atom, or a bromine atom.

Among these, an alkyl group having 1 to 6 carbon atoms, an aryl group having 6 to 8 carbon atoms, or an alkenyl group having 2 to 6 carbon atoms is preferable.

s represents an integer of 5 to 50,000 and preferably an integer of 10 to 20,000.

The organopolysiloxane (C1) may contain an alkenyl group at any of a terminal of the molecular chain or in a side chain and preferably only at the terminal.

In addition, examples of the specific structure of a vinyl group-containing linear organopolysiloxane (C1-2) among the organopolysiloxanes (C1) include a compound represented by Formula (C1-2).

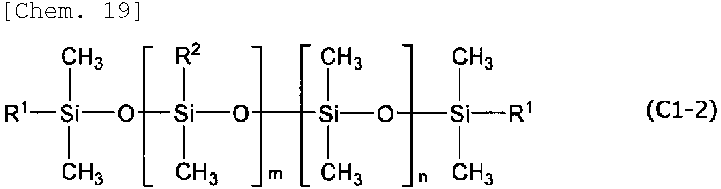

In Formula (C1-2), R₁ and R₂ each independently represent a methyl group or a vinyl group, and at least one of R₁ or R₂ represents a vinyl group.

The vinyl group-containing linear organopolysiloxane (C1-2) contains two or more vinyl groups in a molecule and may include a first vinyl group-containing linear organopolysiloxane (C1-2') in which the content of the vinyl group is less than or equal to 0.4% by mole. The amount of the vinyl group in the first vinyl group-containing linear organopolysiloxane (C1-2') may be equal to or less than 0.1% by mole.

In addition, the vinyl group-containing linear organopolysiloxane (C1-2) may include the first vinyl group-containing linear organopolysiloxane (C1-2') and a second vinyl group-containing linear organopolysiloxane (C1-2'') in which the content of the vinyl group is 0.5% to 15% by mole.

By using a combination of the first vinyl group-containing linear organopolysiloxane (C1-2') and the second vinyl group-containing linear organopolysiloxane (C1-2'') in which the content of the vinyl group is high, as raw rubber which is a raw material of silicone rubber, the vinyl groups can be unevenly distributed, and the sparseness and denseness in terms of the crosslinking density can be more effectively formed in the crosslinked network of the silicone rubber. As a result, the tear strength of the release film is more effectively increased, and the dimensional stability and the transferability are easily controlled.

Specifically, as the vinyl group-containing linear organopolysiloxane (C1-2), for example, it is preferable to use the first vinyl group-containing linear organopolysiloxane (C1-2') in which, in Formula (C1-2), two or more of a unit in which R¹ represents a vinyl group and/or a unit in which R² represents a vinyl group are included in a molecule and the content of the units is equal to or less than 0.4% by mole, and the second vinyl group-containing linear organopolysiloxane (C1-2'') in which the unit in which R¹ represents a vinyl group and/or the unit in which R² represents a vinyl group are included and the content of the units is 0.5% to 15% by mole.

Further, the content of the vinyl group in the first vinyl group-containing linear organopolysiloxane (C1-2') is preferably 0.01% to 0.2% by mole. In addition, the content of the vinyl group in the second vinyl group-containing linear organopolysiloxane (C1-2'') is preferably 0.8% to 12% by mole.

In a case where the first vinyl group-containing linear organopolysiloxane (C1-2') and the second vinyl group-containing linear organopolysiloxane (C1-2'') are combined and blended, the ratio between (C1-2') and (C1-2'') is not particularly limited. For example, the weight ratio (C1-2'):(C1-2'') is preferably 50:50 to 95:5 and more preferably 80:20 to 90:10.

Further, the first and second vinyl group-containing linear organopolysiloxanes (C1-2') and (C1-2'') may be used alone or in combination of two or more kinds thereof.

In addition, the organopolysiloxane (C1) (A) may contain a vinyl group-containing branched organopolysiloxane having a branched structure.

### (Organohydrogen polysiloxane (C2))

Examples of the organohydrogen polysiloxane (C2) having two or more hydrogen atoms bonded to a silicon atom in one molecule include an organohydrogen polysiloxane having a structure represented by Formula (C2).

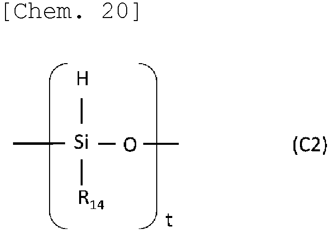

In Formula (C2), R₁₄'s each independently represent an alkyl group such as a methyl group, an ethyl group, a propyl group, or a butyl group, a cycloalkyl group such as a cyclohexyl group, an aryl group such as a phenyl group or a tolyl group, or a group in which some or all hydrogen atoms bonded to carbon atoms of these groups are substituted with a hydroxyl group, a cyano group, a halogen atom, or the like. Among these, a monovalent hydrocarbon group having 1 to 10 carbon atoms, an alkyl group, or an aryl group is preferable. t represents an integer of 2 or greater, preferably 2 to 50, and more preferably 3 to 30.

The blending amount of the organohydrogen polysiloxane (C2) is appropriately set according to the number of moles of the alkenyl group in the organopolysiloxane (C1) having two or more alkenyl groups in one molecule, but it is preferable to carry out adjustment such that the number of moles of the SiH group in the organohydrogen polysiloxane (C2) is in a range of 0.5 to 20 and more preferably in a range of 0.8 to 5 with respect to the alkenyl group in the silicone resin (C1).

The organohydrogen polysiloxane (C2) is classified into a linear organohydrogen polysiloxane (C2-1) having a linear structure and a branched organohydrogen polysiloxane (C2-2) having a branched structure, and can have any one or both of these.

The linear organohydrogen polysiloxane (C2-1) is a polymer that has a linear structure and has a structure in which hydrogen is directly bonded to Si (≡Si-H), undergoes a hydrosilylation reaction with a vinyl group in the vinyl group-containing organopolysiloxane (C1-2) and a vinyl group of a component contained in a raw material of a release layer 1, and crosslinks these components.

The molecular weight of the linear organohydrogen polysiloxane (C2-1) is not particularly limited, but the weight-average molecular weight thereof is, for example, preferably equal to or less than 20,000 and more preferably equal to or greater than 1,000 and equal to or less than 10,000.

The weight-average molecular weight of the linear organohydrogen polysiloxane (C2-1) can be measured in terms of polystyrene by gel permeation chromatography (GPC) using chloroform as an elution solvent.

It is preferable that the linear organohydrogen polysiloxane (C2-1) usually contains no vinyl group. In this manner, it is possible to reliably prevent a crosslinking reaction from progressing in a molecule of the linear organohydrogen polysiloxane (C2-1).

As the linear organohydrogen polysiloxane (C2-1), for example, a compound having a structure represented by Formula (C2-1) is preferably used.

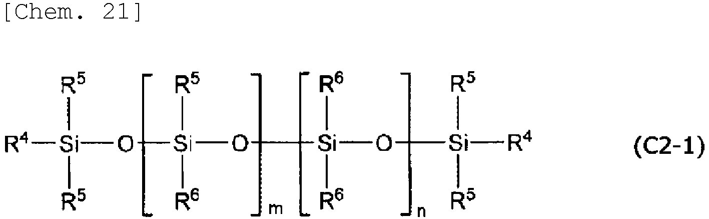

In Formula (C2-1), R⁴ represents a substituted or unsubstituted alkyl group, alkenyl group, or aryl group having 1 to 10 carbon atoms, a hydrocarbon group obtained by combining these, or a hydride group. Examples of the alkyl group having 1 to 10 carbon atoms include a methyl group, an ethyl group, and a propyl group. Among these, a methyl group is preferable. Examples of the alkenyl group having 1 to 10 carbon atoms include a vinyl group, an allyl group, and a butenyl group. Examples of the aryl group having 1 to 10 carbon atoms include a phenyl group.

R⁵ represents a substituted or unsubstituted alkyl group, an alkenyl group, or an aryl group having 1 to 10 carbon atoms, a hydrocarbon group as a combination of these, or a hydride group. Examples of the alkyl group having 1 to 10 carbon atoms include a methyl group, an ethyl group, and a propyl group. Among these, a methyl group is preferable. Examples of the alkenyl group having 1 to 10 carbon atoms include a vinyl group, an allyl group, and a butenyl group. Examples of the aryl group having 1 to 10 carbon atoms include a phenyl group.

In Formula (C2-1), a plurality of R⁴'s are independent of each other and may be the same as or different from each other. The same applies to R⁵. Here, at least two or more of the plurality of R⁴'s and the plurality of R⁵'s represent a hydride group.

R⁶ represents a substituted or unsubstituted alkyl group or aryl group having 1 to 8 carbon atoms, or a hydrocarbon group as a combination of these. Examples of the alkyl group having 1 to 8 carbon atoms include a methyl group, an ethyl group, and a propyl group. Among these, a methyl group is preferable. Examples of the aryl group having 1 to 8 carbon atoms include a phenyl group. A plurality of R⁶'s are independent of each other, and may be the same as or different from each other.

Examples of the substituents of R⁴, R⁵, and R⁶ in Formula (C2-1) include a methyl group and a vinyl group. From the viewpoint of preventing an intramolecular crosslinking reaction, a methyl group is preferable.

m and n each independently represent the number of repeating units constituting the linear organohydrogen polysiloxane (C2-1) represented by Formula (C2-1), m represents an integer of 2 to 150, and n represents an integer of 2 to 150. It is preferable that m represents an integer of 2 to 100 and n represents an integer of 2 to 100.

Further, the linear organohydrogen polysiloxane (C2-1) may be used alone or in combination of two or more kinds thereof.

Due to having a branched structure, the branched organohydrogen polysiloxane (C2-2) is a component that forms a region having a high crosslinking density, thereby largely contributing to the formation of a structure having the sparseness and denseness in terms of the crosslinking density in the silicone rubber system. In addition, similar to the linear organohydrogen polysiloxane (C2-1), the branched organohydrogen polysiloxane (C2-2) is a polymer that has a structure in which hydrogen is directly bonded to Si (≡Si-H), undergoes a hydrosilylation reaction with a vinyl group in the vinyl group-containing organopolysiloxane (C1-2) and a vinyl group of a component contained in a raw material of a release layer 1, and crosslinks these components.

In addition, the specific gravity of the branched organohydrogen polysiloxane (C2-2) is in a range of 0.9 to 0.95.

It is preferable that the branched organohydrogen polysiloxane (C2-2) usually contains no vinyl group. In this manner, it is possible to reliably prevent a crosslinking reaction from progressing in the molecule of the branched organohydrogen polysiloxane (C2-2).

The branched organohydrogen polysiloxane (C2-2) is preferably represented by the following average compositional formula (c).

Average Compositional Formula (c) (Ha(R⁷)3-aSiO_{1/2})ₘ(SiO_{4/2})n

(In Formula (c), R⁷ represents a monovalent organic group, a represents an integer of 1 to 3, m represents the number of Ha(R⁷)₃-aSiO_{1/2} units, and n represents the number of SiO_{4/2} units.)

In Formula (c), R⁷ represents a monovalent organic group and preferably represents a substituted or unsubstituted alkyl group or aryl group having 1 to 10 carbon atoms, or a hydrocarbon group as a combination of these. Examples of the alkyl group having 1 to 10 carbon atoms include a methyl group, an ethyl group, and a propyl group. Among these, a methyl group is preferable. Examples of the aryl group having 1 to 10 carbon atoms include a phenyl group.

In Formula (c), a represents the number of hydride groups (hydrogen atoms directly bonded to Si) which is an integer of 1 to 3 and preferably 1.

In addition, in Formula (c), m represents the number of Ha(R⁷)₃-aSiO_{1/2} units, and n represents the number of SiO_{4/2} units.

The branched organohydrogen polysiloxane (C2-2) has a branched structure. The linear organohydrogen polysiloxane (C2-1) and the branched organohydrogen polysiloxane (C2-2) are different in terms that their structures are linear or branched. In a case where the number of Si is 1, the number of alkyl groups R (R/Si) bonded to Si is in a range of 1.8 to 2.1 for the linear organohydrogen polysiloxane (C2-1) and is 0.8 to 1.7 for the branched organohydrogen polysiloxane (C2-2).

The residue amount of the branched organohydrogen polysiloxane (C2-2) is equal to or greater than 5% due to having a branched structure in a case of being heated, for example, to 1,000°C at a temperature rising rate of 10 °C/min in a nitrogen atmosphere. Meanwhile, due to having a linear structure, the residue amount of the linear organohydrogen polysiloxane (C2-1) is substantially zero in a case of being heated under the above-described conditions.

Specific examples of the branched organohydrogen polysiloxane (C2-2) include compounds having a structure represented by Formula (C2-2).

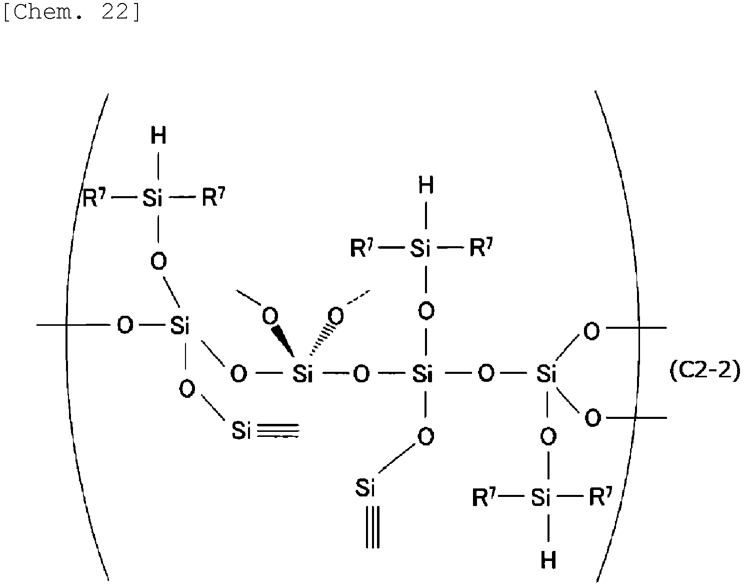

In Formula (C2-2), R⁷ represents a substituted or unsubstituted alkyl group or aryl group having 1 to 8 carbon atoms, a hydrocarbon group obtained by combining these, or a hydrogen atom. Examples of the alkyl group having 1 to 8 carbon atoms include a methyl group, an ethyl group, and a propyl group. Among these, a methyl group is preferable. Examples of the aryl group having 1 to 8 carbon atoms include a phenyl group. Examples of the substituent of R⁷ include a methyl group.

Further, in Formula (C2-2), a plurality of R⁷'s are independent of each other and may be the same as or different from each other.

Further, in Formula (C2-2), "-O-Si≡" denotes that Si has a branched structure that expands three-dimensionally.

The branched organohydrogen polysiloxane (C2-2) may be used alone or in combination of two or more kinds thereof.

Further, in each of the linear organohydrogen polysiloxane (C2-1) and the branched organohydrogen polysiloxane (C2-2), the amount of hydrogen atoms (hydride groups) directly bonded to Si is not particularly limited.

Here, in the release layer 1, the total amount of hydride groups in the linear organohydrogen polysiloxane (C2-1) and the branched organohydrogen polysiloxane (C2-2) is preferably 0.5 to 5 moles and more preferably 1 to 3.5 moles with respect to 1 mole of vinyl groups in the vinyl group-containing linear organopolysiloxane (C1-1). In a case where the total amount of hydride groups is in the above-described ranges, a crosslinked network can be reliably formed between the linear organohydrogen polysiloxane (C2-1) and the branched organohydrogen polysiloxane (C2-2), and the vinyl group-containing linear organopolysiloxane (C1-1).

### (Catalyst and curing accelerator)

In the fourth embodiment, it is preferable that the resin composition further contains a catalyst. In this manner, it is possible to accelerate the curing between the organopolysiloxane (C1) and the organohydrogen polysiloxane (C2).

Examples of the catalyst include a platinum-based catalyst, a rhodium-based catalyst, and a palladium-based catalyst. Among these, platinum is preferable.

Specific examples of the platinum-based catalyst include a platinum fine powder, chloroplatinic acid, an alcohol solution of chloroplatinic acid, a platinum-alkenyl siloxane complex, a platinum-olefin complex, a platinum-carbonyl complex, and a catalyst obtained by dispersing or encapsulating these platinum-based catalysts in a thermoplastic resin.

The amount of the catalyst to be added is preferably 0.01% to 5% by mass, more preferably 0.02% to 2% by mass, and still more preferably 0.05% to 1% by mass with respect to the total amount of the resin composition.

Other components contained in the resin composition according to the fourth embodiment will be described below.

Hereinbefore, the examples of the embodiments of the resin composition according to the present invention have been described. However, the resin composition according to the embodiment of the present invention is not limited thereto.

In addition, the resin composition according to each of the above-described embodiments may further contain a known thermosetting resin and a known curing agent, in addition to the above-described thermosetting component, and may further contain other components depending on the applications thereof.

Hereinafter, other components which may be contained in the resin composition according to the embodiment of the present invention will be described.

### [Thermosetting resin]

Examples of the thermosetting resin according to the present embodiment include one or two or more resins selected from a phenol resin, an epoxy resin, a phenoxy resin, a polyimide resin, a benzoxazine resin, an unsaturated polyester resin, a melamine resin, a silicone resin, a cyanate resin, a maleimide resin, a cyanate resin, and an acrylic resin. As these thermosetting resins, a monomer, an oligomer, and a polymer, which have two or more reactive functional groups in one molecule, can be used in general, and the molecular weight or molecular structure thereof is not particularly limited.

As the epoxy resin, a monomer, an oligomer, or a polymer, which has two or more epoxy groups in one molecule, can be used in general, and the molecular weight or molecular structure thereof is not particularly limited.

Specific examples of the epoxy resin include one or two or more selected from a novolac-type epoxy resin such as a phenol novolac-type epoxy resin or a cresol novolac-type epoxy resin; a bisphenol-type epoxy resin such as a bisphenol A-type epoxy resin or a bisphenol F-type epoxy resin; an aromatic glycidylamine-type epoxy resin such as N,N-diglycidylaniline, N,N-diglycidyltoluidine, a diaminodiphenylmethane-type glycidylamine, or an aminophenol-type glycidylamine; a hydroquinone-type epoxy resin; a biphenyl-type epoxy resin; a stilbene-type epoxy resin; a triphenolmethane-type epoxy resin; a triphenolpropane-type epoxy resin; an alkyl-modified triphenolmethane-type epoxy resin; a triazine nucleus-containing epoxy resin; a dicyclopentadiene-modified phenol-type epoxy resin; a naphthol-type epoxy resin; a naphthalene-type epoxy resin; a naphthylene ether-type epoxy resin; and an aralkyl-type epoxy resin or the like such as a phenol aralkyl-type epoxy resin having a phenylene and/or biphenylene skeleton or a naphthol aralkyl-type epoxy resin having a phenylene and/or biphenylene skeleton, or an aliphatic epoxy resins such as an alicyclic epoxy such as vinylcyclohexene dioxide, dicyclopentadiene oxide, or an alicyclic diepoxy adipate.

The content of the thermosetting resin is preferably equal to or greater than 1% by mass and equal to or less than 50% by mass, more preferably equal to or greater than 2% by mass and equal to or less than 30% by mass or less, and still more preferably equal to or greater than 5% by mass and equal to or less than 20% by mass with respect to the total amount of the resin composition.

In a case where the content of the thermosetting resin is set to be equal to or greater than the above-described lower limits, the fluidity and the moldability of the resin composition can be more effectively improved. In addition, in a case where the content of the thermosetting resin is set to be equal to or less than the above-described upper limits, the curability can be improved, and a satisfactory cured product can be obtained.

### [Curing agent]

The curing agent according to the present embodiment is selected according to the kind of the thermosetting resin and is not particularly limited as long as it reacts with the thermosetting resin. Specific examples of the curing agent include a polyaddition-type curing agent, a catalyst-type curing agent, and a condensation-type curing agent.

Specific examples of the curing agent include a phenol-based curing agent, amines, a polyoxystyrene such as polyparaoxystyrene, an acid anhydride including an alicyclic acid anhydride such as hexahydrophthalic anhydride (HHPA) or methyltetrahydrophthalic anhydride (MTHPA), an aromatic acid anhydride such as trimellitic anhydride (TMA), pyromellitic anhydride (PMDA), or benzophenonetetracarboxylic acid (BTDA), a polymercaptan compound such as a polysulfide, a thioester, or thioether, an isocyanate compound such as an isocyanate prepolymer or a blocked isocyanate, and organic acids such as a carboxylic acid-containing polyester resin.

Specific examples of the phenol-based curing agent include one or more selected from a novolac-type phenol resin such as a phenol novolac resin, a cresol novolac resin, a naphthol novolac resin, an amino triazine novolac resin, a novolac resin, or a trisphenylmethane-type phenol novolac resin; a modified phenol resin such as a terpene-modified phenol resin or a dicyclopentadiene-modified phenol resin; an aralkyl-type resin such as a phenol aralkyl resin having a phenylene skeleton and/or a biphenylene skeleton, or a naphthol aralkyl resin having a phenylene skeleton and/or a biphenylene skeleton; a bisphenol compound such as bisphenol A or bisphenol F; and a resorcinol-type phenol resin. In addition, from the viewpoint of the curability, it is suitable that the hydroxyl group equivalent of the phenol resin-based curing agent is set to, for example, equal to or greater than 90 g/eq and equal to or less than 250 g/eq.

Specific examples of the above-described amines include one or two or more selected from polyamine compounds including aliphatic polyamines such as diethylenetriamine (DETA), triethylenetetramine (TETA), and methaxylenediamine (MXDA), and aromatic polyamines such as diaminodiphenylmethane (DDM), m-phenylenediamine (MPDA), and diaminodiphenylsulfone (DDS), as well as dicyandiamide (DICY), an organic acid dihydrazide, and the like; acid anhydrides including an alicyclic acid anhydride such as hexahydrophthalic anhydride (HHPA) or methyltetrahydrophthalic anhydride (MTHPA), and an aromatic acid anhydride such as trimellitic anhydride (TMA), pyromellitic anhydride (PMDA), or benzophenonetetracarboxylic acid (BTDA).

The content of the curing agent is preferably 5 to 50 parts by mass and more preferably 10 to 30 parts by mass with respect to 100 parts by mass of the thermosetting resin.

In addition, the content of the thermosetting resin and the curing agent is appropriately set according to the thermosetting resin and the curing agent. For example, the phenol-based curing agent as a curing agent and the epoxy resin as a thermosetting resin are adjusted such that an equivalent ratio (EP)/(OH) of the number of epoxy groups (EP) in the total thermosetting resin to the number of phenolic hydroxyl groups (OH) in the total phenol resin is preferably equal to or greater than 0.8 and equal to or less than 1.6, more preferably equal to or greater than 0.9 and equal to or less than 1.3, and still more preferably equal to or greater than 1.0 and equal to or less than 1.2. In a case where the equivalent ratio thereof is in the above-described ranges, the curing characteristics of the obtainable resin composition according to the present embodiment can be enhanced.

The resin composition according to the present embodiment may further contain the following components.

### [Inorganic filler]

The resin composition according to the present embodiment may contain an inorganic filler.

The inorganic filler is used for increasing mechanical strength or imparting heat resistance, flame retardancy, or the like depending on the applications of the cured product and the motor.

Specific examples of the inorganic filler include silicates such as talc, baked clay, unbaked clay, mica, and glass; oxides such as titanium oxide, alumina, boehmite, and silica; carbonates such as calcium carbonate, magnesium carbonate, and hydrotalcite; hydroxides such as aluminum hydroxide, magnesium hydroxide, and calcium hydroxide; sulfates or bisulfates such as barium sulfate, calcium sulfate, and calcium bisulfate; borates such as zinc borate, barium metaborate, aluminum borate, calcium borate, and sodium borate; nitrides such as aluminum nitride, boron nitride, silicon nitride, and carbon nitride; and titanates such as strontium titanate and barium titanate. These may be used alone or in combination of two or more kinds thereof.

An average particle diameter D50 of the inorganic filler is preferably equal to or greater than 0.01 µm and equal to or less than 75 µm and more preferably equal to or greater than 0.05 µm and equal to or less than 50 µm. In a case where the average particle diameter of the inorganic filler is set to be in the above-described ranges, the filling property is improved. The average particle diameter D50 can be an average particle diameter in terms of volume (accumulation: 50%) measured by a commercially available laser-type particle size distribution analyzer.

The content of the inorganic filler is appropriately set according to the use application, but is preferably 10% to 98% by mass, more preferably 20% to 95% by mass, and still more preferably 40% to 95% by mass with respect to the total amount of the resin composition.

In a case where the content of the inorganic filler is set to be equal to or greater than the above-described lower limits, the storage stability and the curability of the cured product can be improved. In addition, in a case where the content of the inorganic filler is set to be equal to or less than the above-described upper limits, the satisfactory fluidity of the resin composition can be obtained, and the moldability can be effectively improved.

### [Coupling agent]

In a case where the resin composition according to the present embodiment contains an inorganic filler, the resin composition may contain a coupling agent. In this manner, it is possible to suppress the aggregation of the inorganic filler and obtain satisfactory fluidity.

Examples of the coupling agent include various silane-based compounds such as epoxysilane, mercaptosilane, aminosilane, an alkyl silane, ureide silane, and vinylsilane, and known coupling agents such as a titanium-based compound, an aluminum chelate, and an aluminum-zirconium-based compound.

Specific examples thereof include silane-based coupling agents such as vinyltrichlorosilane, vinyltrimethoxysilane, vinyltriethoxysilane, vinyltris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-glycidoxypropyltriethoxysilane, γ-glycidoxypropyl methyldimethoxysilane, γ-methacryloxypropylmethyldiethoxysilane, γ-methacryloxypropyltriethoxysilane, vinyltriacetoxysilane, γ-mercaptopropyltrimethoxysilane, γ-aminopropyltriethoxysilane, γ-anilinopropyltrimethoxysilane, γ-anilinopropylmethyldimethoxysilane, γ-[bis(β-hydroxyethyl) ]aminopropyltriethoxysilane, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-phenyl-γ-aminopropyltrimethoxysilane, γ-(β-aminoethyl)aminopropyldimethoxymethylsilane, N-(trimethoxysilylpropyl)ethylenediamine, N-(dimethoxymethylsilylisopropyl)ethylenediamine, methyltrimethoxysilane, dimethyldimethoxysilane, methyltriethoxysilane, N-β-(N-vinylbenzylaminoethyl)-γ-Aminopropyltrimethoxysilane, γ-chloropropyltrimethoxysilane, hexamethyldisilane, vinyltrimethoxysilane, γ-mercaptopropylmethyldimethoxysilane, 3-isocyanatepropyltriethoxysilane, 3-acryloxypropyltrimethoxysilane, a hydrolysate of 3-triethoxysilyl-N-(1,3-dimethyl-butylidene)propylamine); and titanate-based coupling agents such as isopropyltriisostearoyl titanate, isopropyltris(dioctylpyrophosphate)titanate, isopropyltri(N-aminoethyl-aminoethyl)titanate, tetraoctylbis(ditridecylphosphite)titanate, tetra(2,2-diallyloxymethyl-1-butyl)bis(ditridecyl)phosphite titanate, bis(dioctylpyrophosphate)oxyacetate titanate, bis(dioctylpyrophosphate)ethylene titanate, isopropyltrioctanoyl titanate, isopropyldimethacrylic isostearoyl titanate, isopropyltridodecylbenzenesulfonyl titanate, isopropylisostearoyl diacrylic titanate, isopropyltri(dioctyl phosphate)titanate, isopropyl tricumylphenyl titanate, and tetraisopropylbis(dioctyl phosphite) titanate. These may be used alone or in combination of two or more kinds thereof.

The content of the coupling agent is not particularly limited, but is preferably equal to or greater than 0.05% by mass and equal to or less than 3% by mass and more preferably equal to or greater than 0.1% by mass and equal to or less than 2% by mass with respect to the entirety of the resin composition. In a case where the content of the coupling agent is set to be equal to or greater than the above-described lower limits, the dispersibility of the inorganic filler in the resin composition can be enhanced. In addition, in a case where the content of the coupling agent is set to be equal to or less than the above-described upper limits, the fluidity of the resin composition can be enhanced, and the improvement of the moldability can be achieved.

### [Curing accelerator]

The resin composition according to the present embodiment may contain a curing accelerator.

The curing accelerator typically accelerates a reaction between a thermosetting resin and a curing agent.

Specific examples of the curing accelerator include phosphorus atom-containing compounds such as an organic phosphine, a tetra-substituted phosphonium compound, a phosphobetaine compound, an adduct of a phosphine compound and a quinone compound, and an adduct of a phosphonium compound and a silane compound; amidine-based compounds such as 1,8-diazabicyclo(5,4,0)undecene-7 and imidazole; tertiary amines such as benzyldimethylamine; nitrogen atom-containing compounds such as an amidinium salt and an ammonium salts; and phenol compounds such as phenol, bisphenol A, nonylphenol, and 2,3-dihydroxynaphthalene.

In addition, examples of the above-described organic phosphine include triphenylphosphine, tri-p-tolylphosphine, tetraphenylphosphonium tetraphenylborate, triphenylphosphine triphenylborane, and 1,2-bis-(diphenylphosphino)ethane. These may be used alone or in combination of two or more kinds thereof.

The content of the curing accelerator is appropriately set according to the applications thereof, but is preferably 0.1% to 5% by mass and more preferably 0.2% to 3% by mass with respect to the total amount of the resin composition.

In a case where the content of the curing accelerator is set to be equal to or greater than the above-described lower limits, the resin composition is easily cured appropriately. Meanwhile, in a case where the content of the curing accelerator is set to be equal to or less than the above-described upper limits, the molten state can be maintained for a long time, and the low-viscosity state can be maintained for a longer time.

### [Hydroxyl group-containing cyclic compound]

In a case of containing a curing accelerator, the resin composition according to the present embodiment may contain a compound in which two or more adjacent carbon atoms constituting an aromatic ring are each bonded to a hydroxyl group (hereinafter, also referred to as "hydroxyl group-containing cyclic compound"). In this manner, even in a case where a phosphorus atom-containing curing accelerator having no latency is used as the curing accelerator, the reaction during the meltkneading of the resin composition can be suppressed, and thus a stable resin composition can be obtained. In addition, the hydroxyl group-containing cyclic compound also has an effect of lowering the melt viscosity of the resin composition and improving the fluidity.

As the hydroxyl group-containing cyclic compound, a monocyclic compound represented by General Formula (5) or a polycyclic compound represented by General Formula (6) can be used. These compounds may have a substituent other than a hydroxyl group.

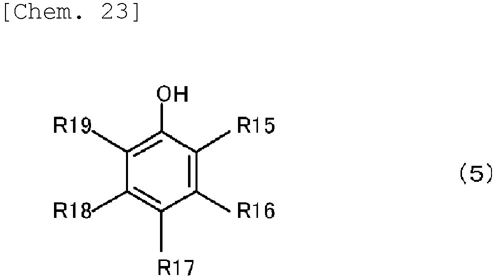

In General Formula (5), any one of R15 or R19 represents a hydroxyl group, and the other represents a hydrogen atom, a hydroxyl group, or a substituent other than a hydroxyl group. In addition, R16, R17, and R18 represent a hydrogen atom, a hydroxyl group, or a substituent other than a hydroxyl group.

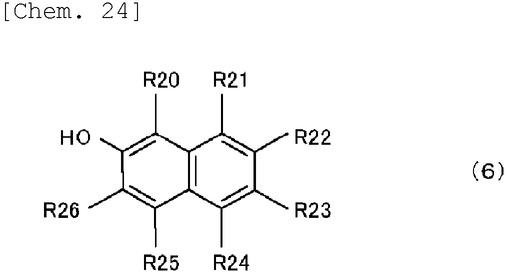

In General Formula (6), any one of R20 or R26 represents a hydroxyl group, and the other represents a hydrogen atom, a hydroxyl group, or a substituent other than a hydroxyl group. In addition, R21, R22, R23, R24, and R25 represent a hydrogen atom, a hydroxyl group, or a substituent other than a hydroxyl group.

Specific examples of the monocyclic compound represented by General Formula (5) include catechol, pyrogallol, gallic acid, a gallic acid ester, and a derivative thereof.

In addition, specific examples of the polycyclic compound represented by General Formula (6) include 1,2-dihydroxynaphthalene, 2,3-dihydroxynaphthalene, and a derivative thereof. Among these, a compound in which two adjacent carbon atoms constituting an aromatic ring are each bonded to a hydroxyl group is preferable from the ease of control of fluidity and curability. In addition, in a case where the volatilization in the kneading step is taken into consideration, it is more preferable that the mother nucleus is a compound having a naphthalene ring which has low volatility and has high weighing stability. In this case, the hydroxyl group-containing cyclic compound can be, specifically, a compound having a naphthalene ring, for example, 1,2-dihydroxynaphthalene, 2,3-dihydroxynaphthalene, or a derivative thereof. These hydroxyl group-containing cyclic compounds may be used alone or in combination of two or more kinds thereof.

The content of the hydroxyl group-containing cyclic compound is preferably equal to or greater than 0.01% by mass, more preferably equal to or greater than 0.03% by mass, and still more preferably equal to or greater than 0.05% by mass with respect to the total value of 100% by mass of the resin composition. In a case where the content of the hydroxyl group-containing cyclic compound is in the above-described ranges, an effect of sufficiently reducing the viscosity and improving the fluidity of the resin composition can be obtained. In addition, the content of the hydroxyl group-containing cyclic compound is preferably equal to or less than 2% by mass, more preferably equal to or less than 0.8% by mass, and still more preferably equal to or less than 0.5% by mass with respect to the total value of 100% by mass of the resin composition. In a case where the content of the hydroxyl group-containing cyclic compound is in the above-described ranges, there is less concern that the curability of the resin composition or physical properties of the cured product are deteriorated.

Further, the resin composition according to the present embodiment can further contain, for example, a coloring agent such as carbon black; a mold release agent such as natural wax, synthetic wax, a higher fatty acid or a metal salt thereof, paraffin, or oxidized polyethylene; a low stress agent such as silicone oil or silicone rubber; a flame retardant such as aluminum hydroxide; an ion-capturing agent such as a hydrous oxide of an element selected from hydrotalcites or magnesium, aluminum, bismuth, titanium, and zirconium; and various additives such as an adhesion imparting agent such as thiazoline, diazole, triazole, triazine, and pyrimidine, and an antioxidant.

### [Production method]

Next, a method for producing the resin composition according to the present embodiment will be described.

The method for producing the resin composition according to the present embodiment is not particularly limited, but for example, a thermosetting component and each of optional components are mixed using a mixer or the like, and then the resultant mixture is kneaded by being melted and heated at a temperature of about 90°C to 120°C using a heating kneader, a thermal roll, an extruder, or the like. Next, the obtained kneaded product is cooled and pulverized to obtain a powdery or granular resin composition. As necessary, the resin composition may be subjected to tableting molding after the pulverization, or formed into a sheet shape by, for example, vacuum lamination molding or compression molding after the pulverization.

In addition, for example, a thermosetting component and each of optional components may be dissolved, mixed, and stirred in a solvent using various mixers, such as an ultrasonic dispersion-type mixer, a high-pressure impact dispersion-type mixer, a high-speed rotary dispersion-type mixer, a bead milltype mixer, a high-speed shear dispersion-type mixer, and rotating and revolution dispersion-type mixer, whereby a varnish-like resin composition is prepared.

Specific examples of the solvent include acetone, methyl ethyl ketone, methyl isobutyl ketone, toluene, ethyl acetate, heptane, cyclohexane, cyclohexanone, tetrahydrofuran, dimethylformamide, dimethylacetamide, dimethyl sulfoxide, ethylene glycol, a cellosolve-based solvent, a carbitol-based solvent, anisole, and N-methylpyrrolidone. The solvent may be used alone or in combination of two or more kinds thereof.

### [Use]

The resin composition of the present embodiment is used as a material for forming the above-described sealing member in a stator that includes a stator core having a plurality of teeth parts and a plurality of slots that are formed alternately in a circumferential direction, a coil wound around the slot and accommodated in the slot, and a sealing member provided by covering the coil in the slot. The stator including the resin composition of the present embodiment as a sealing material is applied to, for example, an electric motor (motor) as a rotating electric machine (an electric motor, a generator, or a dual-use machine of an electric motor and a generator).

Hereinafter, the applications of the stator of a motor will be described as an embodiment.

### 2. Motor and stator

The stator according to the present embodiment includes the cured product of the above-described resin composition for a stator. The cured product is obtained by thermally curing the resin composition according to the present embodiment at 100°C to 200°C for 10 to 900 seconds.

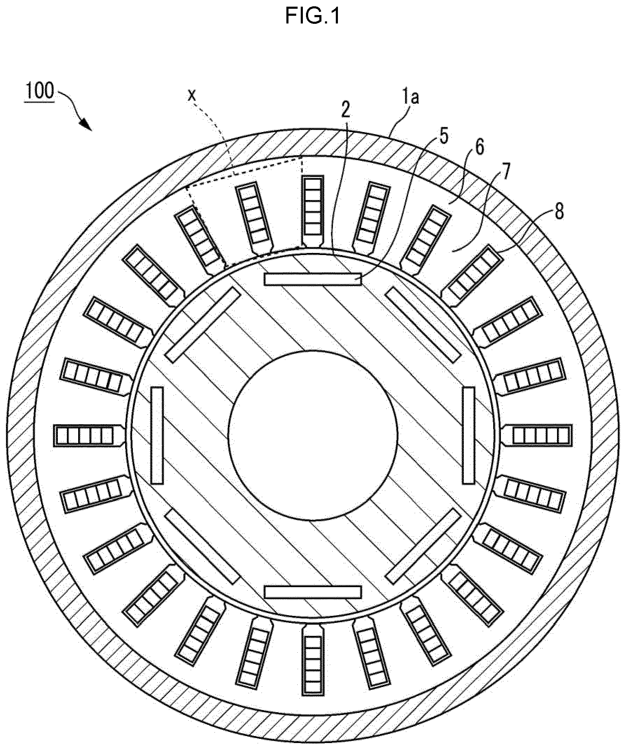

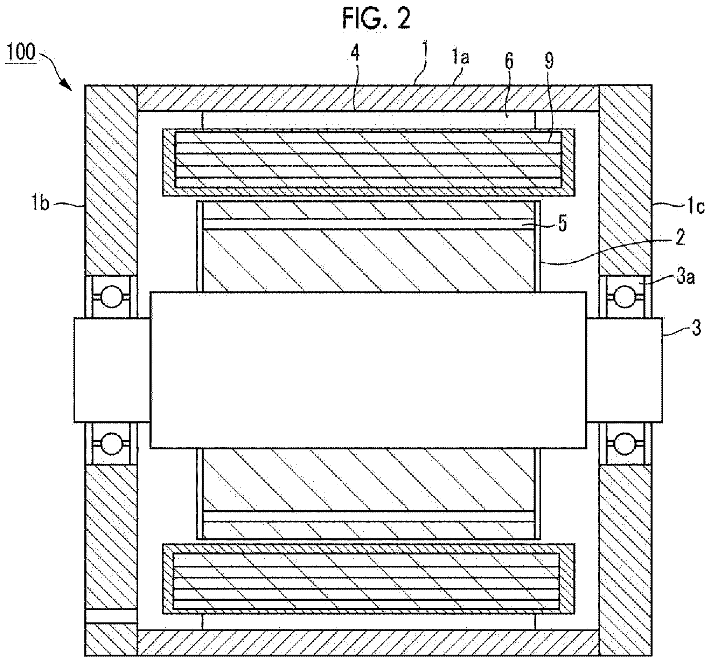

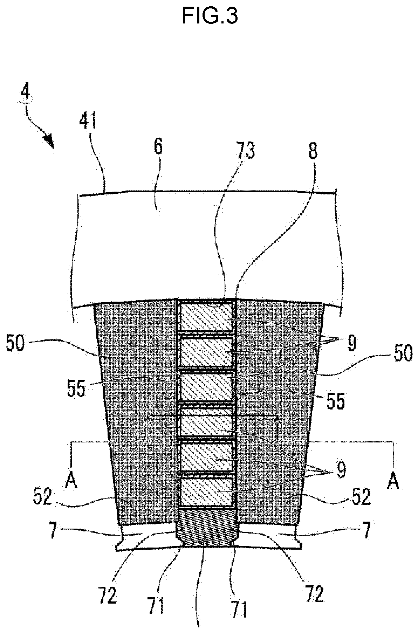

Fig. 1 schematically shows a cross-sectional view of a motor 100 in a direction perpendicular to a rotating shaft direction. Fig. 2 schematically shows a cross-sectional view of the motor 100 in the rotating shaft direction. Fig. 3 is an enlarged view showing the periphery of a slot (area X in Fig. 1) and schematically shows a cross-sectional view of a portion where a coil 9 protrudes from an end part of a slot 8.

### [Basic structure of motor 100]

A motor 100 includes a case 1, and a rotor 2, a stator 4, and a coil 9 accommodated in the case 1.

### [Case 1]

The case 1 includes a cylindrical part 1a and side plate parts 1b and 1c that close two ends in an axial direction of the cylindrical part 1a. As a material of the case 1, for example, an aluminum alloy (casting product), a resin material, or a combination thereof can be used.

### [Rotor 2]

As shown in Fig. 1, the rotor 2 is accommodated inside the case 1. As shown in Fig. 2, a rotating shaft 3 is attached to a center of the rotor 2 as an output shaft. Both ends of the rotating shaft 3 are supported by the side plate parts 1b and 1c through bearings 3a. In this manner, the rotor 2 is freely rotatable about the rotating shaft 3.

Permanent magnets 5 are internally mounted in the rotor 2. Specifically, as shown in Fig. 1, a plurality of (here, eight) permanent magnets 5 are placed on the same circumference at equal intervals. In this case, the permanent magnets 5 are installed such that the magnetic poles of adjacent permanent magnets 5 are different from each other.

As shown in Fig. 2, a cylindrical stator 4 is disposed and fixed on the inner peripheral side of the cylindrical part 1a to surround the outer periphery of the rotor 2. A minute gap (air gap) is provided between the inner peripheral surface of the stator 4 and the outer peripheral surface of the rotor 2.

### [Stator core 41]

A stator core 41 is provided by laminating and tightly fixing a plurality of electromagnetic steel sheets in the axial direction, and is provided with a yoke part 6 that is provided annularly as viewed from an end part in the axial direction as shown in Fig. 1, and with a plurality of teeth parts 7 extending from the yoke part 6 toward the rotor 2 side (inner peripheral side). The plurality of teeth parts 7 are provided by being arranged at equal intervals in the circumferential direction. Here, as shown in Fig. 1, twenty four teeth parts 7 are provided. A slot 8 is provided between each of the teeth parts 7. In addition, the teeth parts 7 are provided with a resin layer 50 that covers the teeth parts 7 in a small thickness by causing a resin composition to circle around the teeth parts 7.

### [Coil 9]

The coil 9 has a rectangular U-shape and is wound to be accommodated in two slots 8 spaced across the teeth part 7. Here, the coil 9 is accommodated in a liner member 20 disposed in the slots 8 in a distributed winding manner (Fig. 1). The coil 9 has a first coil end and a second coil end. The first coil end protrudes to one side of the stator core 41 in the axial direction. The second coil end protrudes to the other side of the stator core 41 in the axial direction. That is, the coil 9 has a pair of coil ends that respectively protrude toward both sides of the stator core 41 in the axial direction.

The coil 9 is formed of, for example, a wire conductor in which a conductor such as copper, aluminum, or iron is formed in a wire shape.

### [Teeth part 7]

The teeth parts 7 are provided in correspondence with the permanent magnets 5 of the rotor 2 described above, and by sequentially exciting the coils 9, the rotor 2 rotates due to attraction and repulsion with the permanent magnets 5 in correspondence with this sequential exciting.

The teeth part 7 has a large width in the circumferential direction on the outer peripheral side and has a small width on the inner peripheral side. The teeth part is tapered toward the inner peripheral side. At the end part on the inner peripheral side of the teeth part 7, teeth part tips 71 are formed to face each other in the circumferential direction to reduce the width of the slot 8.

### [Slot 8]

The slot 8 is a space between adjacent teeth parts 7 and is provided such that wall surfaces 72 of the teeth part 7 facing each other in the radial direction are parallel surfaces, as shown in Fig. 3. A space between the teeth part tips 71 forms an opening on the inner peripheral side of the slot 8. The slot 8 is provided with a plurality of coils 9 arranged on the outer peripheral side (on the side of the yoke part 6) and with a resin sealing part 65 provided on the inner peripheral side (on the side of the teeth part tip 71).

### [Resin sealing part 65]

As shown in Fig. 3, the resin sealing part 65 is provided on the inner peripheral side of the slot 8 (on the side of the teeth part tip 71). The resin sealing part 65 may be provided by insert molding or may be provided as a separate component. Regarding the resin material used for the resin sealing part 65, the above-described sealing resin composition of the present embodiment is used.

In one embodiment, the resin sealing part 65 is provided only within the slot 8 to cover the coil 9.

In another embodiment, the resin sealing part 65 is provided to cover the coil 9 in the slot 8 and at the same time, to cover one coil end of a pair of coil ends. In other words, the resin sealing part 65 is provided to cover any one of the first and second coil ends.

In still another embodiment, the resin sealing part 65 is provided to cover the coil 9 in the slot 8 and at the same time, to cover both of the pair of coil ends. In other words, the resin sealing part 65 is provided to cover both the first and second coil ends.

### [Method of producing stator 4]

A method of producing the stator 4 of the present embodiment will be described.

First, the stator 4 is prepared by laminating and tightly fixing a plurality of electromagnetic steel sheets in the axial direction (stator preparation step).

Next, a resin layer 50 is formed to cover the periphery (a wall surfaces 73, an upper surface 75a, and a lower surface 75b) of teeth parts 7 by insert molding and by allowing an insulating resin composition to integrally circle around the teeth parts 7 (resin layer formation step).

Next, the coils 9 are placed in the slots 8 where the resin layer 50 is provided (coil placement step).

After all the coils 9 are accommodated, a resin sealing part 65 is obtained by filling regions on the inner peripheral side of the slots 8 with the resin composition of the present embodiment and performing insert molding (resin filling step).

The stator 4 shown in Fig. 3 is obtained by performing the above-described steps.

### 3. Disassembling method

A disassembling method according to the present embodiment is performed by immersing the cured product of the above-described resin composition for a stator in a solvent. In this manner, the crosslinking in the cured product is divided or decomposed, and the cured product is dissolved, or a part of the cured product is dissolved or gelated, whereby the cured product can be disassembled.

The immersion temperature of the cured product can be appropriately set according to the applications thereof, but is preferably -20°C to 200°C and more preferably 0°C to 150°C.

In addition, from the viewpoint of carrying out disassembling by a simple method, the immersion of the cured product may be carried out at an environmental temperature, that is, at normal temperature. In this manner, special work such as a cooling or heating treatment is not necessary. For example, the liquid temperature of the solvent can be set to 5°C to 30°C.

Meanwhile, from the viewpoint of the acceleration of the disassembling and the like, the cured product may be subjected to a warming or heating treatment during the immersion of the cured product.

A method of immersing the cured product is not particularly limited, and a part or the entirety of the cured product may be brought into contact with a solvent. In addition, the immersion time is appropriately adjusted according to the size or the like of the cured product.

In addition, the solvent may be poured into a container in which the cured product is accommodated, or the cured product may be immersed and stirred in the solvent in the container.

The solvent may be any solvent as long as the solvent is capable of liberating the -Si-O- structure from the cured product, and the solvent is preferably a solvent having a fluorine ion. The solvent having a fluorine ion may be a solvent which generates a fluoride ion.

The solvent according to the present embodiment can be, for example, a solvent that is prepared as follows.
(i) A solvent obtained by allowing a fluoride of tetra-n-butylammonium fluoride (n-Bu₄NF) to act in an organic solvent such as tetrahydrofuran
   Examples of the above-described fluoride include a fluoride salt of ammonium, an organic amine, or organic ammonium, and specific examples thereof include one or two or more selected from ammonium fluoride, hydrofluoric acid, acidic ammonium fluoride, a methylamine hydrofluoride salt, an ethylamine hydrofluoride salt, a propylamine hydrofluoride salt, tetramethylammonium fluoride, tetraethylammonium fluoride, an ethanolamine hydrofluoride salt, a methylethanolamine hydrofluoride salt, a dimethylethanolamine hydrofluoride salt, a hydroxylamine hydrofluoride salt, a dimethylhydroxylamine hydrofluoride salt, and a triethylenediamine hydrofluoride salt. Among these, ammonium fluoride and tetra-n-butylammonium fluoride are preferable, and tetra-n-butylammonium fluoride is more preferable.
(ii) A solvent obtained by allowing a mineral acid or an organic strong acid to act in an anhydrous organic solvent such as acetonitrile or a hydrous organic solvent
(iii) A solvent obtained by allowing N-bromosuccinimide (NBS) to act in dimethyl sulfoxide (DMSO)
(iv) A solvent obtained by allowing a hydrogen sulfate of an alkali metal to act in a solvent such as water or an alcohol
   As the above-described hydrogen sulfate, an alkali metal salt such as lithium hydrogen sulfate, potassium hydrogen sulfate, or sodium hydrogen sulfate can be used. Among these, a potassium salt or a sodium salt is particularly suitable.
(v) A solvent obtained by allowing an acetic acid aqueous solution to act
(vi) A solvent obtained by reacting excess potassium fluoride·dihydrate with excess tetrabutylammonium chloride in acetonitrile

It is preferable to use, among these solvents, the solvent (i) from the viewpoints of the decomposition rate and the waste liquid treatment.

### 4. Recycling method

The recycling method according to the present embodiment is a recycling method for the material constituting the stator, and includes a step of immersing the structure in a solvent to disassemble the cured product of the resin composition for a stator, and a step of recovering the material from the stator.

In this manner, the material used for the stator can be reused. The step of disassembling the cured product is the same as the method described in the disassembling method.

In addition, a method of recovering the material from the stator is not particularly limited as long as the quality of the material is not deteriorated, and examples thereof include a method of precipitating the material in a solvent in which the cured product is disassembled and recovering only the material by filtration or the like, and a method of taking out a structure from a solvent and destroying the structure together with a cured product which is brittle due to disassembling to recover the material.

The material is not particularly limited as long as the material is insoluble in the above-described solvent and does not cause a chemical reaction, and examples thereof include coil and metals (electromagnetic steel plates).

Hereinbefore, the embodiments of the present invention have been described, but these are merely examples of the present invention, and various configurations other than the above-described configurations can be employed.

### EXAMPLES

Hereinafter, the present invention will be described in detail with reference to examples. However, the contents of the present invention are not limited to the examples.

### 1. Synthesis method

Each silyl ether-type phenol resin was synthesized by the following procedures.

### [Synthesis Example 1] (Synthesis method for silyl ether-type phenol monomer)

56.1 g of 2-allylphenol, 80 g of toluene, and 10 µL of Karstedt's catalyst were put into a flask equipped with a thermometer, a stirrer, and a reflux condenser, and the temperature was raised to 80°C. Thereafter, 28.0 g of 1,1,3,3-tetramethyldisiloxane was added dropwise thereto. Thereafter, the reaction solution was reacted at 80°C for 2 hours, and then toluene was distilled off from the reaction solution. By the above-described operation, 89.3 g of a silyl ether-type phenol monomer (1) represented by Formula (S1) was obtained.

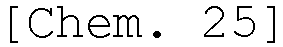

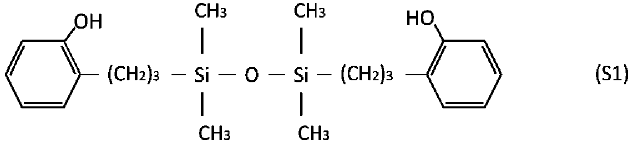

### [Synthesis Example 2] (Synthesis method for silyl ether-type novolac resin (1))

25.0 g of the obtained silyl ether-type phenol monomer (1) and 0.11 g of oxalic acid were put into a flask equipped with a thermometer, a stirrer, and a reflux condenser, and the temperature was gradually raised. Thereafter, 4.5 g of a 37% formalin solution was added dropwise thereto, and the resultant mixture was allowed to react at an internal temperature of 100°C for 5 hours. Thereafter, the temperature was raised to an internal temperature of 120°C, and the moisture was removed by carrying out normal pressure dehydration. By the above-described operation, 27.4 g of a silyl ether-type novolac resin (1) represented by Formula (S2) was obtained.

The silyl ether-type novolac resin (1) had a Mn of 780, a Mw of 2,800, and a hydroxyl group equivalent of 237 g/eq.

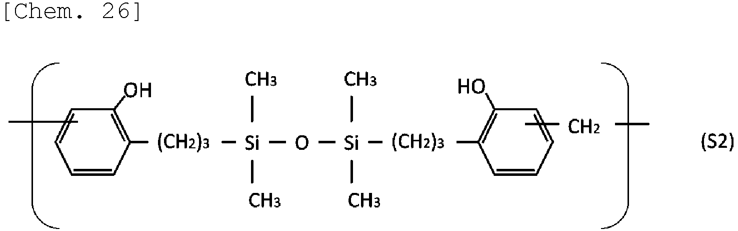

### [Synthesis Example 3] (Synthesis method for silyl ether-type novolac resin (2))

25.0 g of the silyl ether-type phenol monomer (1), 5.8 g of phenol, and 0.22 g of oxalic acid were put into a flask equipped with a thermometer, a stirrer, and a reflux condenser, and the temperature was gradually raised. Thereafter, 9.0 g of a 37% formalin solution was added dropwise thereto, and the resultant mixture was allowed to react at an internal temperature of 100°C for 5 hours. Thereafter, the temperature was raised to an internal temperature of 120°C, and the moisture was removed by carrying out normal pressure dehydration. Further, a dehydration reaction was carried out under reduced pressure to obtain 29.5 g of a silyl ether-type novolac resin (2) represented by Formula (S3).

The silyl ether-type novolac resin (2) had a Mn of 800, a Mw of 2,300, and a hydroxyl group equivalent of 198 g/eq.

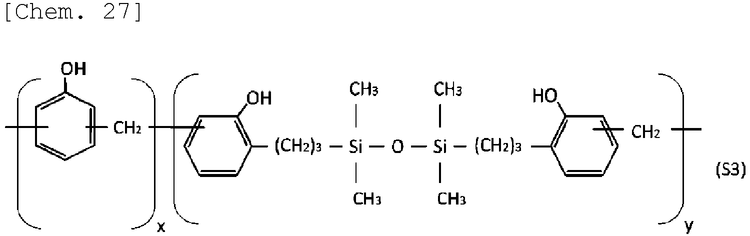

### (In Formula (S3), x:y indicates about 45:55.)

### 2. Preparation of resin composition

### <Comparative Examples 1 and 2, and Examples 1 to 4>

Using a raw material I shown below, the components were mixed at the solid content ratio listed in Table 1, thereby obtaining a mixture. The mixing was carried out at normal temperature using a Henschel mixer. Thereafter, the obtained mixture was subjected to roll kneading at 90°C to 120°C, thereby obtaining a kneaded product. The obtained kneaded product was cooled and then pulverized to obtain each of resin compositions of Comparative Examples 1 and 2 and Examples 1 to 4.

### [Raw material I]

### (Thermosetting resin)

· Epoxy resin 1: ortho-cresol novolac-type epoxy resin (manufactured by DIC Corporation, "EPICRON N-670")
· Epoxy resin 2: BPA bisphenol A-type resin (manufactured by Mitsubishi Chemical Corporation, YL6810)

### (Curing agent)

· Curing agent 1: novolac-type phenol compound (manufactured by Sumitomo Bakelite Co., Ltd., PR-51470)
· Curing agent 2: silyl ether-type novolac resin (1) obtained in Synthesis Example 2
· Curing agent 3: silyl ether-type novolac resin (2) obtained in Synthesis Example 3

### (Curing accelerator)

Curing accelerator 1: triphenylphosphine

### (Inorganic filler)

Inorganic filler 1: fused spherical silica (manufactured by Denka Company Limited, FB-60)

### (Others)

Coloring agent 1: carbon black (manufactured by Mitsubishi Chemical Corporation, CARBON #5)
Coupling agent 1: N-phenyl-3-aminopropyltrimethoxysilane (manufactured by DuPont Toray Specialty Materials K.K., CF-4083)
Mold release agent 1: carnauba wax
Additives: low stress agent, ion-capturing agent, and flame retardant

### <Example 5>

A silicone rubber-based curable composition was adjusted using a raw material II described below.

First, a mixture obtained by mixing a silicone rubber 1 (80 parts by mass), a silicone rubber 2 (20 parts by mass), a coupling agent 2 (10 parts by mass), a coupling agent 3 (0.5 parts by mass), and water (5.25 parts by mass) was kneaded in advance, and an inorganic filler 2 (25 parts by mass) was added to the mixture and further kneaded to obtain a kneaded product (silicone rubber compound).

Here, the kneading after the addition of the inorganic filler 2 was carried out by conducting a first step of kneading the mixture for 1 hour under the condition of 60°C to 90°C in a nitrogen atmosphere for a coupling reaction and a second step of kneading the mixture for 2 hours under the condition of 160°C to 180°C in an atmosphere with reduced pressure in order to remove by-products (ammonia), followed by cooling and kneading for 20 minutes.

Subsequently, the silicone rubber 3 and the curing accelerator 2 were added to the obtained kneaded product (silicone rubber compound) so that the proportion (% by mass) listed in Table 1 was obtained, and then the silicone rubber 3 and the curing accelerator 2 were kneaded with a roll to obtain a silicone rubber-based curable composition of Example 5.

### [Raw material II]

### (Silicone rubber)

### (Organopolysiloxane (C1))

· Silicone rubber 1 (vinyl group-containing linear organopolysiloxane (C1-2') in which content of vinyl groups is small): synthesized according to synthesis scheme 1 (a structure represented by Formula (C1-2), where the structure has a vinyl group only at R1 (terminal))
· Silicone rubber 2 (vinyl group-containing linear organopolysiloxane (C1-2') in which content of vinyl groups is large): synthesized according to synthesis scheme 2 (a structure represented by Formula (C1-2), where the structure has a vinyl group at R1 and R2)
· Silicone rubber 3 (organohydrogen polysiloxane (C2), manufactured by Momentive Inc.): "TC-25D"

### (Inorganic filler)

· Inorganic filler 2: silica particles (particle diameter: 7 nm, specific surface area: 300 m²/g), manufactured by Nippon Aerosil Co., Ltd., "AEROSIL 300"

### (Catalyst and curing accelerator)

· Curing accelerator 2: platinum compound, manufactured by Momentive Inc.: "TC-25A"

### (Others)

· Silane coupling agent 2: hexamethyldisilazane (HMDZ), manufactured by Gelest, Inc., "HEXAMETHYLDISILAZANE (SIH 6110.1)"
·Silane coupling agent 3: divinyltetramethyldisilazane, manufactured by Gelest, Inc., "1,3-DIVINYLTETRAMETHYLDISILAZANE (SID4612.0)"

### <Synthesis of vinyl group-containing organopolysiloxane (C1)>

### [Synthesis Scheme 1: synthesis of vinyl group-containing linear organopolysiloxane (C1-2') in which content of vinyl groups is small]

A vinyl group-containing linear organopolysiloxane (C1-2') in which the content of vinyl groups was small was synthesized according to Formula (7).

That is, 74.7 g (252 mmol) of octamethylcyclotetrasiloxane and 0.1 g of potassium siliconate were added to 300 mL separable flask provided with a cooling tube and a mixing impeller where the atmosphere was replaced with Ar gas. The solution was heated and stirred at 120°C for 30 minutes. At this time, an increase in viscosity was observed.

Next, the solution was heated up to 155°C and was continuously stirred for 3 hours. After 3 hours, 0.1 g (0.6 mmol) of 1,3-divinyltetramethyldisiloxane was added and further stirred at 155°C for 4 hours.

Further, after 4 hours, the solution was diluted with 250 mL of toluene, and was cleaned with water 3 times. After cleaning, the organic layer was cleaned with 1.5 L of methanol and was purified by precipitation to separate an oligomer and a polymer. The obtained polymer was dried under reduced pressure at 60°C overnight to obtain a vinyl group-containing linear organopolysiloxane (C1-2') in which the content of vinyl groups was small (Mn = 2,2 × 10⁵, Mw = 4,8 × 10⁵). In addition, the vinyl group content calculated by H-NMR spectrum measurement was 0.04% by mole.

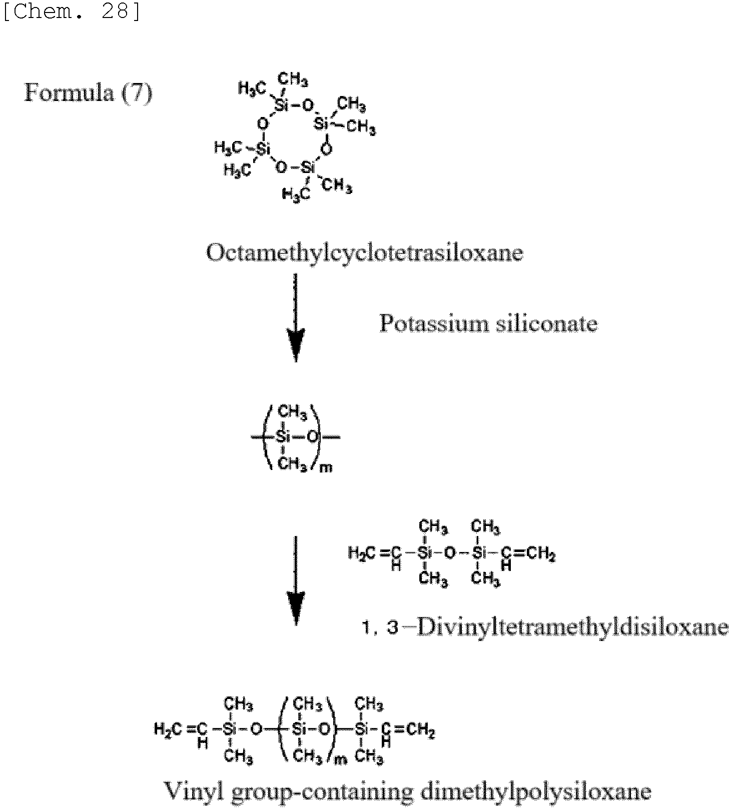

### [Synthesis Scheme 2: synthesis of vinyl group-containing linear organopolysiloxane (C1-2'')) in which content of vinyl groups was large]

A vinyl group-containing linear organopolysiloxane (C1-2') in which a content of vinyl groups is large was synthesized as shown in Formula (8) by the same synthesis step for (C1-2'), except that 0.86 g (2.5 mmol) of 2,4,6,8-tetramethyl-2,4,6,8-tetravinylcyclotetrasiloxane was used in addition to 74.7 g (252 mmol) of octamethylcyclotetrasiloxane in the synthesis step for (C1-2"). (Mn = 2,3×10⁵, Mw = 5,0×10⁵) Further, the content of the vinyl group calculated by H-NMR spectrum measurement was 0.93% by mole.

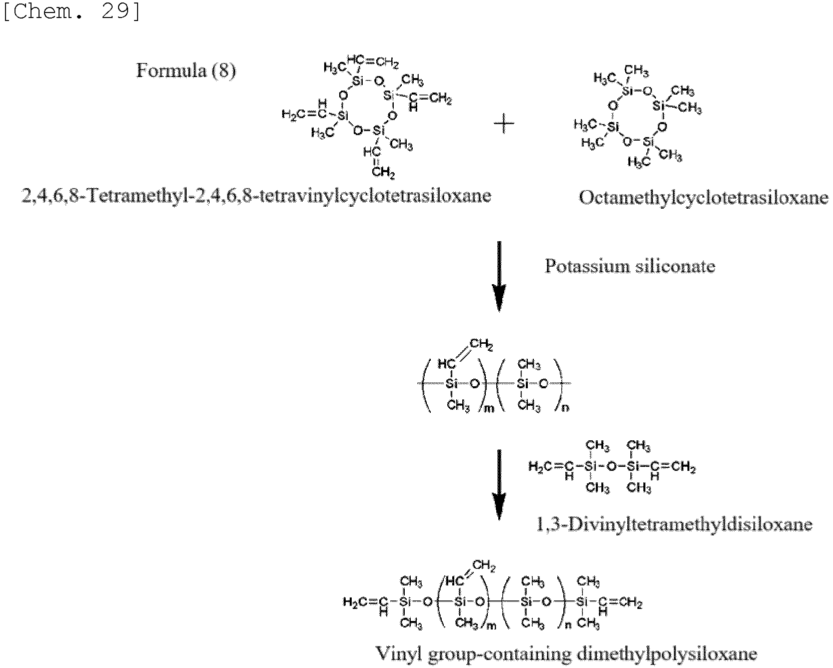

### 3. Checking of structure in cured product of resin composition

In Comparative Examples 1 and 2 and Examples 1 to 4, each of the obtained resin compositions was molded under conditions of a metal mold temperature of 175°C and a curing time of 2 minutes to obtain a cured product. In Example 5, the obtained resin composition was pressed at 160°C and 10 MPa for 20 minutes, was subjected to molding into a sheet shape and primary curing, and subsequently subjected to heating at 200°C for 4 hours and secondary curing, whereby a sheet-shaped silicone rubber cured product was obtained.

Each cured product was subjected to the following resin composition analysis by using thermal decomposition GC-MS. An FT-NMR device (manufactured by JEOL Ltd., JNM-ECA400) was used for the GC-MS measurement.

First, the cured product was heated at 600°C for 1 min in a helium atmosphere, and all the generated components were introduced into a separation column of the GC and trapped with liquid nitrogen. After the heating was completed, the trap was removed, and immediately after the removal of the trap, the GC-MS measurement was started.

The identification of the -Si-O- structure was carried out based on each of the mass spectrum and the retention time, and the determination was carried out according to the following standard. The results are listed in Table 1.

### (Standard)

OK: The -Si-O- structure could be identified.
N/A: The -Si-O- structure could not be identified.

### 4. Evaluation of easily disassembling property

The disassembling property was evaluated using the following solvent.
· Solvent: Tetrabutylammonium fluoride (0.5 mol/L, THF solution)

First, in Comparative Examples 1 and 2 and Examples 1 to 4, each of the obtained resin compositions was molded under conditions of a metal mold temperature of 175°C and a curing time of 2 minutes to obtain a cured product (width: 10 mm, thickness: 4 mm, length: 20 mm). In Example 5, the obtained resin composition was pressed at 160°C and 10 MPa for 20 minutes, subjected to molding into a sheet shape and primary curing, and subsequently subjected to heating at 200°C for 4 hours and secondary curing, whereby a sheet-shaped silicone rubber cured product (width: 10 mm, thickness: 4 mm, length: 20 mm) was obtained.

Next, the obtained cured product was immersed in 25 ml of a solvent in a container and allowed to stand at 23°C for 24 hours.

Thereafter, the container was shaken as it was for 1 minute using a shaker (about 200 reciprocations/minute), and then the entire solution in the container was filtered through a 212 µm mesh filter (JIS standard sieve: 212 µm, diameter: 100 mm). The success or failure of the filtration (the presence or absence of the clogging of the filter) and the residues on the filter were observed and evaluated according to the following criteria. It indicates that the lower the degree of clogging of the filter is and the smaller the residues are, the better the cured product can be dissolved in the solvent and the more satisfactory the disassembling property is. The results are listed in Table 1.

### (Standard)

A: The filter was not clogged, and there were no residues of the cured product or a small amount of residues of the cured product were present on the filter.
B: Although the filter was not clogged, residues of the cured product were significantly present on the filter.
C: The filter was directly clogged, and the filtration could not be performed.

### 5. Recovery of material from stator

In Comparative Examples 1 and 2 and Examples 1 to 4, a metal piece (width: 19 mm, thickness: 3.8 mm, length: 28 mm) considered as a coil winding part of a stator core, which was wound with a copper wire considered as a stator coil, was placed in a mold (width of hole portion: 24 mm, thickness: 4 mm, length: 30 mm) and set in a molding machine, and in a case where the temperature of the mold reached 175°C, each of the resin compositions obtained above was injection-molded, and the molded product was taken out from the mold after a curing time of 120 seconds.

In Example 5, a metal piece (width: 19 mm, thickness: 3.8 mm, length: 28 mm) considered as a coil winding part of a stator core, which was wound with a copper wire considered as a stator coil, was placed in a mold (hole portion: width: 24 mm, thickness: 4 mm, length: 30 mm) and set in a molding machine, and in a case where the temperature of the mold reached 175°C, each of the silicone rubber-based curable compositions obtained above was compression-molded, the mold was taken out from the molding machine after a curing time of 300 seconds, and subsequently, secondary curing was performed at 200°C for 4 hours.

Next, the molded product was immersed in a solvent, and the recovery evaluation of the copper wire was performed. Specifically, tetrabutylammonium fluoride (0.5 mol/L, THF solution) was used as the solvent, and the immersion was performed by allowing the solvent to stand at 23°C for 24 hours.

After the immersion treatment, the molded product was taken out from the solvent, and it was confirmed whether or not the copper wire could be wound from the metal piece, and the evaluation was carried out according to the following criteria.

### (Standard)

OK: The copper wire was wound from the metal piece so that the copper wire was recovered.
N/A: The copper wire could not be wound from the metal piece, and the copper wire could not be recovered.

**[Table 1]**

| | | Unit | Comparative Example 1 | Comparative Example 2 | Example 1 | Example 2 | Example 3 | Example 4 | Example 5 |
|---|---|---|---|---|---|---|---|---|---|
| Epoxy resin | Epoxy resin 1 | mass% | 12.10 | | | | | | |
| | Epoxy resin 2 | | | 10.77 | 7.24 | 8.12 | 4.37 | 10.11 | |
| Curing agent | Curing agent 1 | | 5.25 | 6.53 | | | | | |
| | Curing agent 2 | | | | 10.06 | | 6.07 | 14.05 | |
| | Curing agent 3 | | | | | 9.18 | | | |
| Silicone rubber | Silicone rubber 1 | | | | | | | | 55.55 |
| | Silicone rubber 2 | | | | | | | | 13.89 |
| | Silicone rubber 3 | | | | | | | | 1.77 |
| Curing accelerator | Curing accelerator 1 | | 0.30 | 0.35 | 0.35 | 0.35 | 0.21 | 0.49 | |
| | Curing accelerator 2 | | | | | | | | 0.49 |
| Inorganic filler | Inorganic filler 1 | | 80.00 | 80.00 | 80.00 | 80.00 | 87.00 | 73.00 | |
| | Inorganic filler 2 | | | | | | | | 17.36 |
| Other components | Coloring agent 1 | | 0.30 | 0.30 | 0.30 | 0.30 | 0.30 | 0.30 | |
| | Coupling agent 1 | | 0.20 | 0.20 | 0.20 | 0.20 | 0.20 | 0.20 | |
| | Coupling agent 2 | | | | | | | | 6.94 |
| | Coupling agent 3 | | | | | | | | 0.35 |
| | Release agent 1 | | 0.30 | 0.30 | 0.30 | 0.30 | 0.30 | 0.30 | |
| | Other components | | 1.55 | 1.55 | 1.55 | 1.55 | 1.55 | 1.55 | |
| | Water | | | | | | | | 3.65 |
| Total | | | 100 | 100 | 100 | 100 | 100 | 100 | 100 |
| Results | 3. Confirmation of structure (identification of - Si-O- structure) | | N/A | N/A | OK | OK | OK | OK | OK |
| | 4. Easily disassembling property | | C | C | A | A | A | A | A |
| | 5. Recovery of naterial | | N/A | N/A | OK | OK | OK | OK | OK |

This application claims priority on the basis of Japanese Patent Application No. 2022-138064, filed on August 31, 2022, the entire disclosure of which is incorporated herein by reference.

### REFERENCE SIGNS LIST

1 case
1a cylindrical portion
1b side plate portion
2 rotor
3 rotating shaft
3a bearing
4 stator
5 permanent magnet
6 yoke part
7 teeth part
8 slot
9 coil
20 liner member
41 stator core
50 resin layer
56 allylphenol
65 resin sealing part
71 teeth part tip
72 wall surface
73 wall surface
75a upper surface
75b lower surface
100 motor

## Claims

1. A resin composition for sealing a stator, which is used for forming a sealing member in a stator including a stator core having a plurality of teeth parts and a plurality of slots that are alternately formed in a circumferential direction, a coil wound around the slot, accommodated in the slot, and having a pair of coil ends that each protrude over both sides from the stator core in an axial direction, and a sealing member provided by covering the coil in the slot, the resin composition for a stator comprising:
a thermosetting component,
wherein a cured product obtained by thermally curing the resin composition for a stator has a structure represented by Formula (1) and has an easily disassembling property, 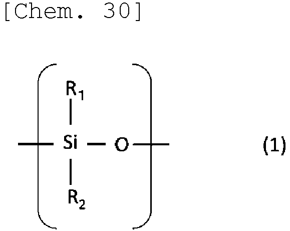
(in Formula (1), R1 and R2 each independently represent any of a hydrogen atom, a hydrocarbon group or aromatic group having 1 to 30 carbon atoms, a hydroxyl group, or an alkoxyl group having 1 to 30 carbon atoms).

2. The resin composition for sealing a stator according to Claim 1,
wherein the thermosetting component has a -Si-O- structure.

3. The resin composition for sealing a stator according to Claim 1 or 2,
wherein the thermosetting component contains a thermosetting resin and a curing agent, and
both the thermosetting component and the curing agent have a -Si-O- structure.

4. The resin composition for sealing a stator according to Claim 1 or 2,
wherein the thermosetting component contains a thermosetting resin and a curing agent, and
the curing agent has a -Si-O- structure.

5. The resin composition for sealing a stator according to Claim 3,
wherein the curing agent includes a phenol-based curing agent.

6. The resin composition for sealing a stator according to Claim 1 or 2,
wherein the thermosetting component contains a thermosetting resin and a curing agent, and
the thermosetting resin has a -Si-O- structure.

7. The resin composition for sealing a stator according to Claim 5,
wherein the thermosetting resin includes one or two or more selected from an epoxy resin, a phenoxy resin, a polyimide resin, a benzoxazine resin, an unsaturated polyester resin, a phenol resin, a melamine resin, a silicone resin, a cyanate resin, a bismaleimide resin, and an acrylic resin.

8. The resin composition for sealing a stator according to Claim 5,
wherein the thermosetting resin includes an epoxy resin.

9. The resin composition for sealing a stator according to Claim 1 or 2, further comprising:
an inorganic filler,
wherein a content of the inorganic filler is 10% to 98% by mass with respect to a total amount of the resin composition for sealing a stator.

10. The resin composition for sealing a stator according to Claim 1 or 2, further comprising:
a silyl ether-modified novolac resin.

11. The resin composition for sealing a stator according to Claim 1 or 2, further comprising:
a phenol resin having a weight-average molecular weight (Mw) of 500 to 10000.

12. The resin composition for sealing a stator according to Claim 1 or 2,
wherein the resin composition for sealing a stator is in a form of a powdery, granular, tablet, or sheet shape.

13. A stator comprising:
a stator core having a plurality of teeth parts and a plurality of slots that are alternately formed in a circumferential direction;
a coil wound around the slot, accommodated in the slot, and having a pair of coil ends that each protrude over both sides from the stator core in an axial direction; and
a sealing member provided by covering the coil in the slot,
wherein the sealing member is formed of a cured product of the resin composition for sealing a stator according to Claim 1 or 2.

14. A method for disassembling the stator according to Claim 13, the method comprising:
a step of immersing the stator in a solvent to disassemble the cured product of the resin composition for sealing a stator.

15. The method for disassembling the stator according to Claim 14,
wherein the solvent is a solvent containing a fluorine ion.

16. The method for disassembling the stator according to Claim 14,
wherein the immersion is performed at -20°C to 200°C.

17. The method for disassembling the stator according to Claim 14,
wherein the immersion is performed at 5°C to 30°C.

18. A recycling method for a material constituting the stator according to Claim 13, the recycling method comprising:
a step of immersing the stator in a solvent to disassemble the cured product; and
a step of recovering the material from the stator.
